# EUROPÄISCHE PATENTSCHRIFT

(11) **EP 3 390 166 B1**
(45) Veröffentlichungstag und Bekanntmachung des Hinweises auf die Patenterteilung: **23.10.2019**
(21) Anmeldenummer: 16812956.7
(22) Anmeldetag: 16.12.2016
(51) Int. Cl.: B60R 21/231, B60R 21/207, B60R 21/00

(54) **AIRBAGVORRICHTUNG FÜR EIN KRAFTFAHRZEUG, SOWIE AIRBAGKISSEN FÜR EINE AIRBAG-VORRICHTUNG**
AIRBAGVORRICHTUNG FÜR EIN KRAFTFAHRZEUG, SOWIE AIRBAGKISSEN FÜR EINE AIRBAGVORRICHTUNG
SYSTÈME DE COUSSIN GONFLABLE DE SÉCURITÉ POUR VÉHICULE À MOTEUR, ET AIRBAG POUR SYSTÈME DE COUSSIN GONFLABLE DE SÉCURITÉ

(30) Priorität: 17.12.2015 DE 102015016347
(43) Veröffentlichungstag der Anmeldung: 24.10.2018
(73) Patentinhaber: Autoliv Development AB, 447 83 Vårgårda (SE)
(72) Erfinder: BERNTSSON, Mats, 44158 Alingsås (SE); SANDINGE, Pär, 44195 Alingsås (SE); KARLSSON, Hanna, 53473 Stora Levene (SE)
(74) Vertreter: Schön, Thilo
(86) Internationale Anmeldenummer: PCT/EP2016/081403
(87) Internationale Veröffentlichungsnummer: WO 2017/103090

(56) Entgegenhaltungen:
- EP-A1- 0 855 975
- EP-A1- 2 876 002
- DE-A1-102005 051 171
- DE-A1-102009 006 688
- DE-A1-102009 044 734
- GB-A- 2 322 338
- US-A1- 2012 049 498

## Beschreibung

Die vorliegende Erfindung betrifft eine Airbagvorrichtung für ein Kraftfahrzeug, die an einem Sitzrahmen angeordnet und befestigt werden kann, und die ausgebildet ist, den Kopf und den Brustkorb eines Insassen im Falle eines Seitenaufpralls oder Fahrzeugüberschlags zu schützen. Weiterhin betrifft die vorliegende Erfindung ein Airbagkissen für die erwähnte Airbagvorrichtung.

Airbagvorrichtungen für Kraftfahrzeuge werden mittlerweile vielseitig in modernen Kraftfahrzeugen als zusätzliche Schutzsysteme verwendet. Beispielsweise werden Airbagvorrichtungen als Schutzsystem für den Fahrer eines Kraftfahrzeuges verwendet, und sind hierzu vorzugsweise im Lenkrad direkt vor dem Fahrer des Kraftfahrzeuges angeordnet. Weiterhin werden Airbagvorrichtungen auch als Schutzsystem für den Beifahrer verwendet, und sind hier vorzugsweise im Armaturenbrett vor dem Beifahrersitz im Bereich des Handschuhfaches angeordnet. Auch ist es bekannt, Airbagvorrichtungen im unteren Bereich des Armaturenbrettes vor dem Fahrersitz sowie dem Beifahrersitz anzubringen, die die Knie sowie die unteren Beine des Fahrers und Beifahrers im Falle eines Unfalles schützen.

Als weitere ergänzende Schutzsysteme werden Airbagvorrichtungen auch zum Seitenschutz von Insassen eines Kraftfahrzeuges verwendet, um den Kopf und den Brustkorb eines Insassen im Falle eines Seitenaufpralls oder Fahrzeugüberschlags zu schützen. Hierzu werden Airbagvorrichtungen beispielsweise im nach außen weisenden Seitenbereich der Lehne des Fahrersitzes bzw. des Beifahrersitzes angebracht, oder sie werden im Dachbereich des Innenraums über den Seitenfenstern angeordnet, um im Falle eines Unfalles mit einem als Gardine aufgeblasenen Airbagkissen die Insassen des Kraftfahrzeuges zu schützen.

Diese bekannten Airbagvorrichtungen gibt es in verschiedenen Größen und Ausführungsformen, die an den jeweiligen geplanten Anbringungsort bzw. Verwendungszweck im Innenraum des Fahrzeuges angepasst sind.

So ist beispielsweise aus der DE 10 2009 044 734 eine Airbagvorrichtung zum Seitenschutz von Insassen eines Kraftfahrzeugs bekannt, die an einem vorbestimmten Abschnitt des Sitzrahmens angebracht ist. Diese bekannte Airbagvorrichtung weist ein Airbagmodul, sowie ein in dem Airbagmodul zusammengefaltet angeordnetes Airbagkissen auf. Das Airbagmodul ist mittels Bolzen an dem Sitzrahmen befestigt und weist weiterhin einen Bügel auf, der mit einem ersten Ende an einen vorbestimmten Abschnitt des Airbagkissen gekoppelt ist, und mit einem zweiten Ende an den Bolzen. Mit dem Bügel soll es ermöglicht werden, dass das Airbagkissen mit einer vorbestimmten Länge in eine vorbestimmte Position entfaltet wird, wenn das Airbagkissen aufgeblasen wird. Dokument US2012/0049498 A1 offenbart eine Airbagvorrichtung und ein Airbagkissen gemäß dem Oberbegriff des Patentanspruchs 1 und 8.

In den letzten Jahren haben sich jedoch die Anforderungen an die Sicherheitssysteme in Kraftfahrzeugen wesentlich erhöht, nicht zuletzt durch die schärferen Sicherheitsvorschriften der für die Kraftfahrzeugsicherheit zuständigen Behörden. Um eine höchste Bewertung für ein Kraftfahrzeug durch die für die Kraftfahrzeugsicherheit zuständigen Behörden zu erzielen, ist es nunmehr erforderlich, Kraftfahrzeuge mit einem so genannten "FCA" (Front Center Airbag) auszustatten. Dieser FCA ist in der Mitte des Fahrzeuges zwischen dem Fahrersitz und einem Sitz eines Passagiers angeordnet, vorzugsweise im zum benachbarten Sitz weisenden Seitenbereich der Lehne des Fahrersitzes oder Beifahrersitzes, und schützt bei einem Seitenaufprall die Flanke oder den Kopf einer Person in diesen Sitzen, wenn das Airbagkissen entfaltet ist.

Aufgrund der gegebenen Geometrie der Sitze, und der sich daraus ergebenden Begrenzung des Einbauraums, ist im oberen Seitenbereich des Sitzes sowie in der Kopfstütze kein ausreichender Einbauraum für ein Airbagmodul für einen FCA vorhanden. Airbagmodule für einen FCA können daher nur in dem unteren Seitenbereich der Rückenlehne störungsfrei untergebracht werden, da nur hier ein ausreichender Einbauraum vorhanden ist.

Die Anordnung des Airbagmoduls im unteren Seitenbereich der Rückenlehne führt jedoch eine Reihe von Nachteilen mit sich.

Herkömmliche Airbagmodule sind üblicherweise symmetrisch aufgebaut, was bedeutet, dass der Gasgenerator in der Mitte angeordnet ist, und das Airbagkissen symmetrisch zur Mitte hin gefaltet ist. Bei der Auslösung des Airbagmoduls wird somit auch das Airbagkissen symmetrisch aufgeblasen, das heißt das Airbagkissen entfaltet sich zu gleichen Teilen oberhalb und unterhalb des Gasgenerators, was ein stabiles Positionierverhalten des Airbagkissen mit sich führt. Wird nun ein herkömmliches Airbagmodul mit einem herkömmlichen Airbagkissen für einen FCA verwendet, so muss ein extra großes Airbagkissen verwendet werden, dass im entfalteten bzw. aufgeblasenen Zustand von der Einbauposition des Airbagmoduls im unteren Seitenbereich der Lehne bis über die Kopfstütze des Sitzes nach oben reichen muss, um den Kopf einer Person zu schützen.

Zum einen benötigt dieses extra große Airbagkissen auch im gefalteten Zustand ein großes Volumen. Das Volumen zum Einbau von Modulen im unteren Seitenbereich der Rückenlehne ist jedoch begrenzt, so dass sich beim Einbau eines extra großen Airbagkissen aufgrund des erhöhten Volumens des extra großen Airbagkissens Funktionsprobleme ergeben.

Zum anderen wird ein ebenso großer Teil des extra grossen Airbagkissens nach unten hin entfaltet und aufgeblasen, da das Airbagkissen hier symmetrisch zum Gasgenerator hin gefaltet ist. Nach unten hin ist jedoch der Raum zwischen den beiden Sitzen durch den Getriebetunnel bzw. die Mittelkonsole begrenzt, so dass sich der untere Teil des extra großen Airbagkissen nicht richtig entfalten kann. Dadurch wird jedoch auch die Entfaltung des oberen Teils des extra großen Airbagkissens, sowie dessen Positionierung bezüglich des Kopfes, beeinflusst, so dass die sichere Funktionsweise hier nicht gewährleistet werden kann.

Zur Vermeidung des letztgenannten Nachteils ist es bekannt, Airbagkissen so zu falten und am Gasgenerator anzubringen, dass sie sich im wesentlichen vom Gasgenerator nach oben hin unsymmetrisch entfalten, wenn der Gasgenerator ausgelöst wird und das Airbagkissen aufbläst.

Damit kann zwar zum einen ein kleineres Airbagkissen verwendet werden, welches ein kleineres Volumen im gefalteten Zustand benötigt, und die Airbagvorrichtung kann im unteren Seitenbereich der Rückenlehne des Sitzes angebracht werden, wo es ein ausreichendes Volumen zum unterbringen der Airbagvorrichtung gibt. Weiterhin wird eine Beeinflussung des aufgeblasenen Airbagkissens durch die Mittelkonsole bzw. den Getriebetunnel vermieden.

Zum anderen hat das Airbagkissen hier jedoch ein instabiles Positionierverhalten, da die Entfernung vom Befestigungspunkt des Airbagkissens am Sitzrahmen bis zum Kopfbereich des Airbagkissens gross ist und das Airbagkissen unsymmetrisch aufgeblasen wird, so dass eine Verdrehung bzw. Verschiebung des Kopfbereichs des Airbagkissens bezüglich der geplanten Anwendungsposition möglich ist. Insbesondere ist es möglich, da das Airbagkissen in der Längsrichtung des Fahrzeuges nach oben und vorne hin entfaltet wird (d.h. unsymmetrisch bezüglich des Gasgenerators), dass das Airbagkissen eine nach rückwärts gerichtete Verdrehung erfährt, die den Kopfbereich des Airbagkissens aus der geplanten Anwendungsposition führt. Damit besteht jedoch die Gefahr, dass die Passagiere auf den Vordersitzen im Falle eines Seitenaufpralls oder Fahrzeugüberschlags mit den Köpfen zusammenstossen können. Diese nach rückwärts gerichtete Verdrehung des Airbagkissens ist im wesentlichen auf die explosionsartige schnelle Aufblasung des Airbagkissens, und die nachfolgende Entleerung nach der vollständigen Aufblasung, zurückzuführen.

Vor diesem Hintergrund ist es daher Aufgabe der vorliegenden Erfindung, eine einfache, kostengünstige und funktionssichere Airbagvorrichtung für ein Kraftfahrzeug zur Verfügung zu stellen, die den Kopf und den Brustkorb eines Insassen im Falle eines Seitenaufpralls oder Fahrzeugüberschlags zuverlässig schützt. Weiterhin ist es Aufgabe der vorliegende Erfindung, ein Airbagkissen für ein Kraftfahrzeug zur Verfügung zu stellen, das den Kopf und den Brustkorb eines Insassen im Falle eines Seitenaufpralls oder Fahrzeugüberschlags zuverlässig schützt.

Gelöst wird diese Aufgabe durch eine Airbagvorrichtung gemäß Anspruch 1, sowie ein Airbagkissen gemäss Anspruch 13. Weitere vorteilhafte Ausgestaltungen der Erfindung sind Gegenstand der Unteransprüche.

Die erfindungsgemäße Airbagvorrichtung für ein Kraftfahrzeug kann an einem Sitzrahmen angeordnet und befestigt werden und ist ausgebildet, den Kopf und den Brustkorb eines Insassen im Falle eines Seitenaufpralls oder Fahrzeugüberschlags zu schützen. Sie weist einen Gasgenerator, ein Airbagkissen sowie eine erste Befestigungsanordnung auf. Die erste Befestigungsanordnung verbindet den Gasgenerator und das Airbagkissen miteinander, um die Airbagvorrichtung am Sitzrahmen zu befestigen. Erfindungsgemäß und vorteilhafterweise weist die Airbagvorrichtung eine zweite Befestigungsanordnung auf, die im Seitenbereich des Airbagkissens oberhalb des Verbindungsbereiches mit der ersten Befestigungsanordnung angeordnet ist, und die ausgebildet ist, um das Airbagkissen mit einem zusätzlichen Befestigungspunkt am Sitzrahmen oberhalb der ersten Befestigungsanordnung zu befestigen.

Durch diese erfindungsgemäße und vorteilhafte Ausgestaltung wird ein zusätzlicher Befestigungspunkt für das Airbagkissen oberhalb der ersten Befestigungsanordnung zur Verfügung gestellt, der die Stabilität und die Positionierungsgenauigkeit des Airbagkissens deutlich erhöht. Insbesondere wird damit erreicht, dass der Kopfbereich des Airbagkissen bei der Aktivierung des Airbagkissens zuverlässig im vorgesehenen Entfaltungsbereich neben der Kopfstütze des Sitzes positioniert wird, und damit die Funktionsfähigkeit der erfindungsgemäßen Airbagvorrichtung gewährleistet. Ein Zusammenstossen der Köpfe von auf den Vordersitzen sitzenden Passagieren kann damit zuverlässig vermieden werden, so dass die Insassen auch im Falle eines Seitenaufpralls oder Fahrzeugüberschlags zuverlässig geschützt werden.

Als besonders vorteilhaft ist hier anzusehen, dass durch die Ausbildung eines zusätzlichen Befestigungspunktes oberhalb der ersten Befestigungsanordnung bei der Aufblasung des Airbagkissens eine nach rückwärts gerichtete Verdrehung des Airbagkissens verhindert wird. Dieses gewährleistet die genaue und funktionssichere Positionierung des Kopfbereiches des Airbagkissens im vorgesehenen Entfaltungsbereich neben der Kopfstütze des Sitzes.

Um ein zeitiges Eingreifen der zweiten Befestigungsanordnung zu erzielen, und damit jeden Ansatz einer nach rückwärts gerichteten Verdrehung des Airbagkissens zu vermeiden, ist das Airbagkissen vorteilhafterweise und erfindungsgemäß mit der zweiten Befestigungsanordnung direkt am Sitzrahmen befestigt. Damit verbleibt das untere Ende des Airbags auch beim aufblasen des Airbags in der Nähe des Gasgenerators.

Eine erste bevorzugte Ausführungsform sieht daher vor, dass die zweite Befestigungsanordnung eine Befestigungsausnehmung aufweist, mittels der das Airbagkissen mit einem Seitenbereich direkt an dem Sitzrahmen befestigt werden kann. Damit kann, was erfindungsgemäß und vorteilhaft vorgesehen ist, das Airbagkissen mittels Bolzen, Schrauben oder dergleichen, die mit dem Sitzrahmen sowie der Befestigungsausnehmung zusammenwirken, mit einem Seitenbereich direkt am Sitzrahmen befestigt werden.

Gemäß einer weiteren bevorzugten Ausführungsform ist die Befestigungsausnehmung mit einem sie umgebenden Verstärkungsmaterial versehen. Dieses kann erfindungsgemäß und vorteilhafterweise auf das Airbagkissen um die Befestigungsausnehmung herum aufgenäht oder aufgeklebt sein, so dass eine starke und feste Verbindung zwischen dem Airbagkissen und dem Sitzrahmen hergestellt wird, die den beim aufblasen des Airbagkissens entstehenden starken Kräften standhalten kann und somit die Funktionsfähigkeit der Airbagvorrichtung gewährleistet.

Gemäß einer weiteren vorteilhaften Weiterbildung ist die Befestigungsausnehmungen als ein Befestigungsloch ausgebildet, dass so mit dem Durchmesser auf das vorgesehene Befestigungsmittel abgestimmt ist, dass das Airbagkissen schnell und einfach mit dem zusätzlichen Befestigungspunkt am Sitzrahmen angebracht und befestigt werden kann. Dieses ermöglicht eine schnelle und einfache Montage des Airbagkissens am Sitzrahmen, was insgesamt die Montage der Airbagvorrichtung erleichtert.

Eine zweite bevorzugte Ausführungsform sieht vor, dass die zweite Befestigungsanordnung ein Zugelement aufweist, dass mit einem ersten Ende im Seitenbereich des Airbagkissens oberhalb des Verbindungsbereiches mit der ersten Befestigungsanordnung angeordnet ist. Erfindungsgemäß und vorteilhafterweise ist eine Befestigungsvorrichtung am Zugelement vorgesehen, um das Airbagkissens mittels der Befestigungsvorrichtung mit einem zusätzlichen Befestigungspunkt am Sitzrahmen oberhalb der ersten Befestigungsanordnung zu befestigen.

Gemäß einer erfindungsgemäßen und vorteilhaften Weiterbildung ist das Zugelement als Riemen ausgebildet, so dass das Zugelement einfach zusammen mit dem Airbagkissen gefaltet oder gerollt werden kann. Damit wird das Volumen der Airbagvorrichtung jedoch insgesamt weiter verringert, so dass auch der benötigte Einbauraum für die Airbagvorrichtung im Seitenbereich des Sitzes verringert wird. Folglich kann hier auch die Polsterung und damit der Komfort des Sitzes verbessert werden.

Eine dritte bevorzugte Ausführungsform sieht vor, dass die zweite Befestigungsanordnung ein Zugelement aufweist, dass mit einem ersten Ende im Seitenbereich des Airbagkissens oberhalb des Verbindungsbereiches mit der ersten Befestigungsanordnung angeordnet ist, und mit einem zweiten Ende am gegenüberliegenden Seitenbereich des Airbagkissens angeordnet ist. Erfindungsgemäß und vorteilhafterweise ist eine Befestigungsvorrichtung am Zugelement zwischen dem ersten Ende und dem zweiten Ende vorgesehen, um das Airbagkissen mittels der Befestigungsvorrichtung mit einem zusätzlichen Befestigungspunkt am Sitzrahmen oberhalb der ersten Befestigungsanordnung zu befestigen.

Hierbei ist erfindungsgemäß und vorteilhafterweise gemäß einer Weiterbildung die Befestigungsvorrichtung so am Zugelement angeordnet, dass der Abstand zwischen Befestigungsvorrichtung und erstem Ende geringer ist als der Abstand zwischen Befestigungsvorrichtung und zweitem Ende.

Dieses ermöglicht ein zeitiges Eingreifen der zweiten Befestigungsanordnung, wenn die Airbagvorrichtung ausgelöst wird, so dass jeder Ansatz einer nach rückwärts gerichteten Verdrehung des Airbagkissens vermieden wird.

Zudem ist auch hier erfindungsgemäß und vorteilhaft vorgesehen, dass das Zugelement als Riemen ausgebildet ist, so dass das Zugelement einfach zusammen mit dem Airbagkissen gefaltet oder gerollt werden kann. Damit wird das Volumen der Airbagvorrichtung jedoch insgesamt weiter verringert, so dass auch der benötigte Einbauraum für die Airbagvorrichtung im Seitenbereich des Sitzes verringert wird. Folglich kann hier auch die Polsterung und damit der Komfort des Sitzes verbessert werden.

Gemäß einer weiteren bevorzugten Weiterbildung sowohl der zweiten Ausführungsform als auch der dritten Ausführungsform ist die Länge des Zugelementes bzw. des Riemens geringer als die Breite des Airbagkissens.

Dieses ermöglicht ein zeitiges Eingreifen der zweiten Befestigungsanordnung, wenn die Airbagvorrichtung ausgelöst wird, so dass jeder Ansatz einer nach rückwärts gerichteten Verdrehung des Airbagkissens vermieden und die Funktionsfähigkeit der Airbagvorrichtung gewährleistet wird.

Weiterhin wird hierdurch auch eine Stabilisierung des Airbagkissens in Seitenrichtung erzielt, so dass eine seitliches wegklappen des aufgeblasenen Airbagkissens verhindert wird. Damit behält das aufgeblasene Airbagkissen seine Position im vorgesehenen Anwendungsbereich seitlich neben dem Sitz, so dass die Zuverlässigkeit und Funktionsfähigkeit weiter verbessert wird.

Vorteilhafterweise und erfindungsgemäß weist gemäß einer Weiterbildung die Befestigungsvorrichtung einen Bügel auf, der am Sitzrahmen angeschraubt, eingeklemmt oder eingehakt werden kann.

Dieses erleichtert und vereinfacht die Montage der Airbagvorrichtung am Sitzrahmen wesentlich. Der am Zugelement bzw. Riemen angebrachte Bügel kann ohne großen Aufwand in der vorgesehenen Weise an Sitzrahmen angebracht werden, um den zusätzlichen Befestigungspunkt oberhalb der ersten Befestigungsanordnung zu bilden. Die Airbagvorrichtung wird als Paket mit dem zusammengefalteten bzw. zusammengerollten Airbagkissen zur Montage angeliefert, wobei das Zugelement bzw. der Riemen als Anhängsel am Paket hängt. Die Airbagvorrichtung wird mit der ersten Befestigungsanordnung an der vorgesehenen Stelle am Sitzrahmen befestigt, und der am Riemen angebrachte Bügel wird oberhalb der ersten Befestigungsanordnung am Sitzrahmen befestigt. Durch diese erfindungsgemäße und vorteilhafte Ausbildung der zweiten Befestigungsanordnung als Riemen, der als Anhängsel am Paket hängt, kann die Airbagvorrichtung im Vergleich zur ersten Ausführungsform kleiner gepackt werden, so dass sie weniger Einbauraum im Seitenbereich der Sitzlehne benötigt. Folglich kann damit unter anderem die Polsterung des Sitzes und damit der Sitzkomfort verbessert werden.

Gemäß einer weiteren bevorzugten Weiterbildung ist die Airbagvorrichtung an der Seite des Sitzrahmens angeordnet, die zum benachbarten Sitz gerichtet ist. Damit wird eine einfache und funktionssichere Airbagvorrichtung mit einem FCA zur Verfügung gestellt, die in der Mitte des Fahrzeugs angeordnet ist, und die Insassen auf den Sitzen im Wirkbereich des FCA im Falle einer Seitenkollision oder eines Fahrzeugüberschlags wirksam schützt.

Gemäß einer weiteren bevorzugten Weiterbildung ist der größte Teil des Airbagkissens nach dem auslösen des Airbags oberhalb der Airbagvorrichtung angeordnet. Damit wird vorteilhafterweise eine Airbagvorrichtung für ein Kraftfahrzeug zur Verfügung gestellt, die sowohl den Kopf als auch den Brustkorb eines Insassen im Falle eines Seitenaufpralls oder Fahrzeugüberschlags zuverlässig schützt.

Gemäß einer bevorzugten Weiterbildung weist die erste Befestigungsanordnung Befestigungsbolzen auf, mittels denen die Airbagvorrichtung am Sitzrahmen angeordnet und befestigt werden kann. Damit wird es erfindungsgemäß und vorteilhafterweise einfach ermöglicht, die Airbagvorrichtung funktionssicher in dafür am Sitzrahmen vorgesehene Ausnehmungen einzuführen und dort zu befestigen, was zu einer schnellen und damit kostengünstigen Montage beiträgt.

Die Befestigungsbolzen können dabei gemäß einer weiteren bevorzugten Weiterbildung direkt am Gasgenerator angeordnet sein, welches die Konstruktion und damit die Herstellung der Airbagvorrichtung weiter vereinfacht und kostengünstiger macht.

Die Befestigungsbolzen können aber auch an einer Befestigungshülse angeordnet sein, wobei dann der Gasgenerator zur Bildung der Airbagvorrichtung innerhalb der Befestigungshülse angeordnet wird. Dem Fachmann sind weitere Möglichkeiten zur Befestigung der Airbagvorrichtung am Sitzrahmen mittels Befestigungsbolzen bekannt, die hiermit in die Offenbarung und den Umfang der Erfindung mit einbezogen werden.

Weitere, dem Fachmann bekannte Möglichkeiten zur Befestigung der Airbagvorrichtung am Sitzrahmen sind verkleben oder Spannbänder.

Eine weitere vorteilhafte Weiterbildung der Erfindung sieht vor, dass der Gasgenerator innerhalb des Airbagkissens angeordnet ist, wobei das Airbagkissen zweite Befestigungsausnehmungen aufweist, die ausgebildet sind, um an einem Befestigungsbolzen angebracht zu werden.

Dieses erleichtert und vereinfacht die Montage der Airbagvorrichtung wesentlich, insbesondere wenn gemäß einer weiteren vorteilhaften Weiterbildung die Befestigungsbolzen direkt am Gasgenerator angeordnet sind. Das Airbagkissen weist hierbei vorteilhafterweise eine integrierte Tasche auf, in welche der Gasgenerator eingeführt wird, und von welcher aus das Airbagkissens aufgeblasen wird, wenn der Gasgenerator ausgelöst wird. Diese integrierte Tasche weist die zweiten Befestigungsausnehmungen auf, die erfindungsgemäß und vorteilhafterweise jeweils als ein Befestigungsloch ausgebildet sind, dessen Durchmesser so mit dem Durchmesser des Befestigungsbolzen abgestimmt ist, dass es vorzugsweise dichtend auf einen Befestigungsbolzen aufgeschoben werden kann.

Gemäß einer bevorzugten Weiterbildung weist die zweite Befestigungsanordnung Bolzen oder Schrauben auf, mittels denen die zweite Befestigungsanordnung am Sitzrahmen oberhalb der ersten Befestigungsanordnung angeordnet und befestigt werden kann. Damit wird es erfindungsgemäß und vorteilhafterweise einfach ermöglicht, die Airbagvorrichtung mit einem zusätzlichen Befestigungspunkt funktions-sicher am Sitzrahmen zu befestigen, was zu einer schnellen und damit kostengünstigen Montage beiträgt.

Als besonders vorteilhaft ist hier anzusehen, dass die Airbagvorrichtung nur wenige Bauteile aufweist, die auf einfache Weise miteinander verbunden werden können, und dass die Airbagvorrichtung schnell und einfach an einem Sitzrahmen angebracht und mit diesem fest verbunden werden kann. Dieses vereinfacht und erleichtert den Zusammenbau sowie den Einbau der Airbagvorrichtung, und reduziert zudem die Kosten.

Das erfindungsgemäße Airbagkissen für eine Airbagvorrichtung für ein Kraftfahrzeug kann an einem Sitzrahmen angeordnet und befestigt werden und ist ausgebildet, den Kopf und den Brustkorb eines Insassen im Falle eines Seitenaufpralls oder Fahrzeugüberschlags zu schützen. Die Airbagvorrichtung weist neben dem Airbagkissen einen Gasgenerator sowie eine erste Befestigungsanordnung auf, wobei die erste Befestigungsanordnung, der Gasgenerator und das Airbagkissen miteinander verbunden sind, um die Airbagvorrichtung am Sitzrahmen zu befestigen. Erfindungsgemäß und vorteilhafterweise weist das Airbagkissen eine zweite Befestigungsanordnung auf, die im Seitenbereich des Airbagkissens oberhalb des Verbindungsbereiches mit der ersten Befestigungsanordnung angeordnet ist, und die ausgebildet ist, um das Airbagkissen mit einem zusätzlichen Befestigungspunkt am Sitzrahmen oberhalb der ersten Befestigungsanordnung zu befestigen.

Durch diese erfindungsgemäße und vorteilhafte Ausgestaltung wird ein zusätzlicher Befestigungspunkt für das Airbagkissen oberhalb der ersten Befestigungsanordnung zur Verfügung gestellt, der die Stabilität und die Positionierungsgenauigkeit des Airbagkissens deutlich erhöht. Insbesondere wird damit erreicht, dass der Kopfbereich des Airbagkissen zuverlässig im vorgesehenen Entfaltungsbereich neben der Kopfstütze des Sitzes positioniert wird, und damit die Funktionsfähigkeit der erfindungsgemäßen Airbagvorrichtung gewährleistet. Ein Zusammenstossen der Köpfe von auf den Vordersitzen sitzenden Passagieren kann damit zuverlässig vermieden werden, so dass die Insassen auch im Falle eines Seitenaufpralls oder Fahrzeugüberschlags zuverlässig geschützt werden.

Als besonders vorteilhaft ist hier anzusehen, dass durch die Ausbildung eines zusätzlichen Befestigungspunktes, oberhalb des Verbindungsbereiches der ersten Befestigungsanordnung mit dem Airbagkissen, bei der Aufblasung des Airbagkissens eine nach rückwärts gerichtete Verdrehung des Airbagkissens verhindert wird. Dieses gewährleistet die genaue und funktionssichere Positionierung des Kopfbereiches des Airbagkissens im vorgesehenen Entfaltungsbereich neben der Kopfstütze des Sitzes. Der Begriff "oberhalb" bezieht sich hier auf die Einbaulage des Airbagkissens in der Airbagvorrichtung. In der Einbaulage hat das Airbagkissen eine nach unten, zum Fahrzeugboden gerichteten Seite, sowie eine nach oben, zum Fahrzeugdach gerichtete Seite. Durch den Begriff "oberhalb" wird somit die Anordnung und Relation der zweiten Befestigungsanordnung zur ersten Befestigungsanordnung für den Fachmann deutlich definiert. Ebenso sind die Zuordnungen wie beispielsweise "untere Rand", "Oberer Rand", "Seitenbereich" etc. hierdurch für den Fachmann ausreichend definiert.

Um ein zeitiges Eingreifen der zweiten Befestigungsanordnung zu erzielen, und damit jeden Ansatz einer nach rückwärts gerichteten Verdrehung des Airbagkissens zu vermeiden, ist das Airbagkissen vorteilhafterweise und erfindungsgemäß mit der zweiten Befestigungsanordnung direkt am Sitzrahmen befestigt. Damit verbleibt das untere Ende des Airbags auch beim aufblasen des Airbags in der Nähe des Gasgenerators.

Eine erste bevorzugte Ausführungsform sieht daher vor, dass die zweite Befestigungsanordnung eine Befestigungsausnehmung aufweist, mittels der das Airbagkissen mit einem Seitenbereich an dem Sitzrahmen befestigt werden kann. Damit kann, was gemäß einer weiteren bevorzugten Weiterbildung erfindungsgemäß und vorteilhaft vorgesehen ist, das Airbagkissen mittels Bolzen, Schrauben oder dergleichen, die mit dem Sitzrahmen sowie der Befestigungsausnehmung zusammenwirken, mit einem Seitenbereich direkt am Sitzrahmen befestigt werden.

Gemäß einer weiteren bevorzugten Weiterbildung ist die Befestigungsausnehmung mit einem sie umgebenden Verstärkungsmaterial versehen. Dieses kann erfindungsgemäß und vorteilhafterweise auf das Airbagkissen um die Befestigungsausnehmung herum aufgenäht oder aufgeklebt sein, so dass eine starke und feste Verbindung zwischen dem Airbagkissen und dem Sitzrahmen hergestellt wird, die den beim aufblasen des Airbagkissens entstehenden starken Kräften standhalten kann und somit die Funktionsfähigkeit der Airbagvorrichtung gewährleistet.

Gemäß einer weiteren vorteilhaften Weiterbildung ist die Befestigungsausnehmungen als ein Befestigungsloch ausgebildet, dass so mit dem Durchmesser auf das vorgesehene Befestigungsmittel abgestimmt ist, dass das Airbagkissen schnell und einfach mit dem zusätzlichen Befestigungspunkt am Sitzrahmen angebracht und befestigt werden kann. Dieses ermöglicht eine schnelle und einfache Montage des Airbagkissens am Sitzrahmen, was insgesamt die Montage der Airbagvorrichtung erleichtert.

Eine zweite bevorzugte Ausführungsform sieht vor, dass die zweite Befestigungsanordnung ein Zugelement aufweist, dass mit einem ersten Ende im Seitenbereich des Airbagkissens oberhalb des Verbindungsbereiches mit der ersten Befestigungsanordnung angeordnet ist. Erfindungsgemäß und vorteilhafterweise ist eine Befestigungsvorrichtung am Zugelement vorgesehen, um das Airbagkissens mittels der Befestigungsvorrichtung mit einem zusätzlichen Befestigungspunkt am Sitzrahmen oberhalb der ersten Befestigungsanordnung befestigen zu können.

Gemäß einer erfindungsgemäßen und vorteilhaften Weiterbildung ist das Zugelement als Riemen ausgebildet, so dass das Zugelement einfach zusammen mit dem Airbagkissen gefaltet oder gerollt werden kann. Damit wird das Volumen der Airbagvorrichtung jedoch insgesamt weiter verringert, so dass auch der benötigte Einbauraum für die Airbagvorrichtung im Seitenbereich des Sitzes verringert wird. Folglich kann hier auch die Polsterung und damit der Komfort des Sitzes verbessert werden.

Eine dritte bevorzugte Ausführungsform sieht vor, dass die zweite Befestigungsanordnung ein Zugelement aufweist, dass mit einem ersten Ende im Seitenbereich des Airbagkissens oberhalb des Verbindungsbereiches mit der ersten Befestigungsanordnung angeordnet ist, und mit einem zweiten Ende am gegenüberliegenden Seitenbereich des Airbagkissens angeordnet ist. Erfindungsgemäß und vorteilhafterweise ist eine Befestigungsvorrichtung am Zugelement zwischen dem ersten Ende und dem zweiten Ende vorgesehen, um das Airbagkissen mittels der Befestigungsvorrichtung mit einem zusätzlichen Befestigungspunkt am Sitzrahmen oberhalb der ersten Befestigungsanordnung befestigen zu können.

Hierbei ist erfindungsgemäß und vorteilhafterweise gemäß einer Weiterbildung die Befestigungsvorrichtung so am Zugelement angeordnet, dass der Abstand zwischen Befestigungsvorrichtung und erstem Ende geringer ist als der Abstand zwischen Befestigungsvorrichtung und zweitem Ende.

Dieses ermöglicht ein zeitiges Eingreifen der zweiten Befestigungsanordnung, wenn die Airbagvorrichtung ausgelöst und das Airbagkissen aufgeblasen wird, so dass jeder Ansatz einer nach rückwärts gerichteten Verdrehung des Airbagkissens vermieden wird.

Zudem ist auch hier erfindungsgemäß und vorteilhaft vorgesehen, dass das Zugelement als Riemen ausgebildet ist, so dass das Zugelement einfach zusammen mit dem Airbagkissen gefaltet oder gerollt werden kann. Damit wird das Volumen der Airbagvorrichtung jedoch insgesamt weiter verringert, so dass auch der benötigte Einbauraum für die Airbagvorrichtung im Seitenbereich des Sitzes verringert wird. Folglich kann hier auch die Polsterung und damit der Komfort des Sitzes verbessert werden. Gemäß einer weiteren bevorzugten Weiterbildung sowohl der zweiten Ausführungsform als auch der dritten Ausführungsform ist die Länge des Zugelementes bzw. des Riemens geringer als die Breite des Airbagkissens.

Dieses ermöglicht ein zeitiges Eingreifen der zweiten Befestigungsanordnung, wenn die Airbagvorrichtung ausgelöst und das Airbagkissen aufgeblasen wird, so dass jeder Ansatz einer nach rückwärts gerichteten Verdrehung des Airbagkissens vermieden und die Funktionsfähigkeit des Airbagkissens und damit der Airbagvorrichtung gewährleistet wird.

Weiterhin wird hierdurch auch eine Stabilisierung des Airbagkissens in Seitenrichtung erzielt, so dass eine seitliches wegklappen des aufgeblasenen Airbagkissens verhindert wird. Damit behält das aufgeblasene Airbagkissen seine Position im vorgesehenen Anwendungsbereich seitlich neben dem Sitz, so dass die Zuverlässigkeit und Funktionsfähigkeit weiter verbessert wird.

Vorteilhafterweise und erfindungsgemäß weist gemäß einer Weiterbildung die Befestigungsvorrichtung einen Bügel auf, der am Sitzrahmen angeschraubt, eingeklemmt oder eingehakt werden kann.

Dieses erleichtert und vereinfacht die Montage des Airbagkissens, und damit der gesamten Airbagvorrichtung, am Sitzrahmen wesentlich. Der am Zugelement bzw. Riemen angebrachte Bügel kann ohne großen Aufwand in der vorgesehenen Weise am Sitzrahmen angebracht werden, um den zusätzlichen Befestigungspunkt oberhalb der ersten Befestigungsanordnung zu bilden. Die Airbagvorrichtung wird als Paket mit dem zusammengefalteten bzw. zusammengerollten Airbagkissen zur Montage angeliefert, wobei das Zugelement bzw. der Riemen als Anhängsel am Paket hängt. Die Airbagvorrichtung wird mit der ersten Befestigungsanordnung an der vorgesehenen Stelle am Sitzrahmen befestigt, und der am Riemen angebrachte Bügel wird oberhalb der ersten Befestigungsanordnung am Sitzrahmen befestigt. Durch diese erfindungsgemäße und vorteilhafte Ausbildung der zweiten Befestigungsanordnung als Riemen, der als Anhängsel am Paket hängt, kann die Airbagvorrichtung im Vergleich zur ersten Ausführungsform kleiner gepackt werden, so dass sie weniger Einbauraum im Seitenbereich der Sitzlehne benötigt. Folglich kann damit unter anderem die Polsterung des Sitzes und damit der Sitzkomfort verbessert werden.

Eine weitere vorteilhafte Weiterbildungen sieht vor, dass das Airbagkissen Haltemittel aufweist, die innerhalb des Airbagkissens angeordnet sind, um die Seiten des Airbagkissens beim aufblasen des Airbagkissens mit einem vorgegebenen Abstand voneinander anzuordnen.

Damit kann ein Airbagkissen mit großem Volumen zur Verfügung gestellt werden, ein so genanntes 3D Airbagkissen, bei dem die Seitenwände des Airbagkissens nur an den Rändern zur Bildung des Airbagkissens miteinander verbunden bzw. vernäht sind. In Mittenbereich des Airbagkissens sind die Seitenwände jedoch nicht direkt miteinander verbunden, hier werden sie beim aufblasen des Airbagkissens durch die Haltemittel, vorzugsweise in Form von Halteseilen oder Halteriemen, mit einem vorbestimmten Abstand voneinander gehalten. Damit wird vermieden, dass die Köpfe der Insassen auf den durch das aufgeblasene Airbagkissen getrennten Sitzen trotz aufgeblasenem Airbagkissen aufeinandertreffen. Währen die Seitenwände des Airbagkissens im Mittenbereich direkt miteinander vernäht, wäre hier nicht genügend Volumen zur Vermeidung des Zusammentreffens der Köpfe der Insassen.

Eine weitere vorteilhafte Weiterbildung der Erfindung sieht vor, dass ein Gasgenerator innerhalb des Airbagkissens angeordnet werden kann, wobei das Airbagkissen zweite Befestigungsausnehmungen aufweist, die ausgebildet sind, um an der ersten Befestigungsanordnung angebracht zu werden.

Dieses erleichtert und vereinfacht die Montage des Airbagkissens in der Airbagvorrichtung wesentlich, insbesondere wenn gemäß einer weiteren vorteilhaften Weiterbildung die erste Befestigungsanordnung Befestigungsbolzen aufweist, die direkt am Gasgenerator angeordnet sind. Das Airbagkissen weist hierbei vorteilhafterweise eine integrierte Tasche auf, in welche der Gasgenerator eingeführt werden kann, und von welcher aus das Airbagkissens aufgeblasen wird, wenn der Gasgenerator ausgelöst wird. Diese integrierte Tasche weist die zweiten Befestigungsausnehmungen auf, die erfindungsgemäß und vorteilhafterweise jeweils als ein Befestigungsloch ausgebildet sind, dessen Durchmesser so mit dem Durchmesser des Befestigungsbolzen abgestimmt ist, dass es vorzugsweise dichtend auf einen Befestigungsbolzen aufgeschoben werden kann.

Die erste Befestigungsanordnung kann aber auch gemäß einer weiteren vorteilhaften Weiterbildung eine Befestigungshülse aufweisen, wobei Befestigungsbolzen dann an der Befestigungshülse angeordnet sein können, und das Airbagkissen mit einem in dessen integrierter Tasche angeordnetem Gasgenerator zur Bildung der Airbagvorrichtung innerhalb der Befestigungshülse anzuordnen. Dem Fachmann sind weitere Möglichkeiten zur Befestigung des Airbagkissens am Sitzrahmen mittels Befestigungsbolzen oder anderer Befestigungsmittel bekannt, die hiermit in die Offenbarung und den Umfang der Erfindung mit einbezogen werden.

Durch diese erfindungsgemäße und vorteilhafte Ausgestaltung des Airbagkissens wird ein weiterer zusätzlicher Befestigungspunkt für das Airbagkissen zur Verfügung gestellt, der die Stabilität und die Positionierungsgenauigkeit des Airbagkissens deutlich erhöht. Insbesondere wird damit erreicht, dass der Kopfbereich des Airbagkissens zuverlässig im vorgesehenen Entfaltungsbereich neben der Kopfstütze des Sitzes positioniert wird, und damit die Funktionsfähigkeit der erfindungsgemäßen Airbagvorrichtung gewährleistet.

Weitere Vorteile und Merkmale der Erfindung sind aus der nachfolgenden Beschreibung im Zusammenhang mit den Zeichnungen ersichtlich. In den Zeichnungen zeigt:
**Fig. 1****:** eine Teilansicht des Fahrersitzes (60) eines Kraftfahrzeuges von hinten im Aufriss, mit einer am Sitzrahmen (64) angeordneten Airbagvorrichtung (10) gemäss einer ersten Ausführungsform;
**Fig. 2****:** einen Schnitt durch den Sitzrahmen (64) der Fig.1 entlang der Linie A-A;
**Fig. 3****:** eine Ansicht eines Airbagkissens (30) gemäss einer ersten Ausführungsform mit einer zweiten Befestigungsanordnung (38);
**Fig. 4****:** eine vergrösserte Ansicht des Details Y der Fig.3;
**Fig. 5****:** eine schematische Darstellung der Wirkungsweise der Airbagvorrichtung (10);
**Fig. 6****:** eine schematische Darstellung der Wirkungsweise der Airbagvorrichtung (10);
**Fig. 7****:** einen Schnitt durch die zweite Befestigungsanordnung (38) der Fig. 3;
**Fig. 8****:** eine Teilansicht des Fahrersitzes (60) eines Kraftfahrzeuges von hinten im Aufriss, mit einer am Sitzrahmen (64) angeordneten Airbagvorrichtung (10) gemäss einer zweiten Ausführungsform;
**Fig. 9****:** einen Schnitt durch den Sitzrahmen (64) der Fig.8 entlang der Linie A-A;
**Fig. 10****:** eine Ansicht eines Airbagkissens (30) gemäss einer zweiten Ausführungsform mit einer zweiten Befestigungsanordnung (100) gemäss einer zweiten Ausführungsform;
**Fig. 11****:** eine Ansicht eines Airbagkissens (30) gemäss einer zweiten Ausführungsform mit einer zweiten Befestigungsanordnung (100) gemäss einer dritten Ausführungsform.

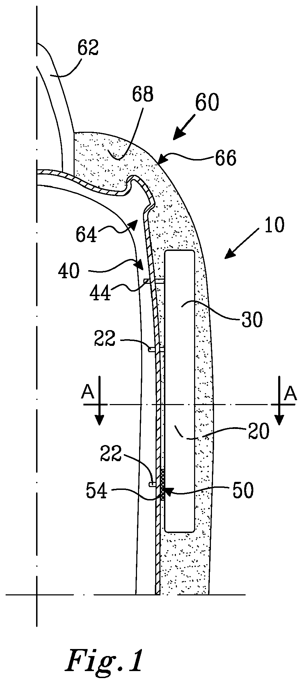

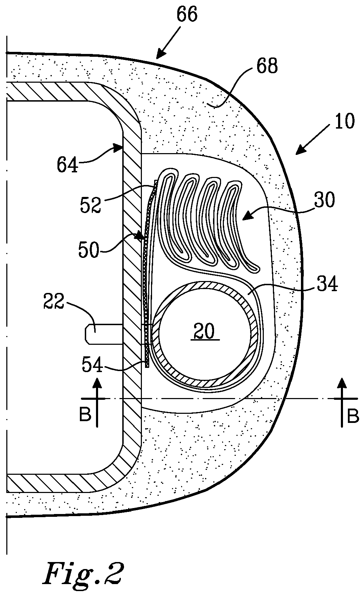

Die **Fig. 1** zeigt eine Teilansicht im Aufriss des Fahrersitzes (60) eines Kraftfahrzeugs von hinten, mit einer am Sitzrahmen (64) angeordneten Airbagvorrichtung (10) gemäss einer ersten Ausführungsform. Diese Teilansicht ist ein Schnitt entlang der Linie **B-B** in der **Fig. 2****.** Dargestellt ist hier zur Vereinfachung nur der Teil des Sitzrahmens (64), an dem die Airbagvorrichtung (10) angeordnet ist. Am oberen Ende des Sitzrahmen (64) ist eine Kopfstütze (62) angeordnet, und an der nach außen zum benachbarten Sitz weisenden Seite des Sitzrahmens (64) ist eine Polsterung (68) angebracht, die mit einem Bezug (66) bezogen ist.

Die Airbagvorrichtung (10) ist mittels zweier Bolzen (22) am Sitzrahmen (64) angeordnet und befestigt, und weist neben den zwei Bolzen (22) ein Airbagkissen (30) sowie einen Gasgenerator (20) auf. Der Gasgenerator (20) ist innerhalb des Airbagkissens (30) angeordnet, so dass in dieser Darstellung nur die Außenseite des den Gasgenerator (20) umgebenden Airbagkissens (30) zu sehen ist.

Am oberen Ende der Airbagvorrichtung (10) ist weiterhin ein Bolzen (44) zu sehen, der ebenfalls am Sitzrahmen (64) angeordnet und befestigt ist. An diesem Bolzen (44), der oberhalb der Bolzen (22) im oberen Seitenbereich des Sitzrahmens (64) angeordnet ist, ist das Airbagkissen (30) mit seiner Befestigungsausnehmung (38) befestigt. Wie weiter unten erläutert wird, wird auf diese Weise ein zusätzlicher Befestigungspunkt (40) zur Verfügung gestellt, an dem das Airbagkissen (30) direkt mit dem Sitzrahmen (64) verbunden bzw. an dem Sitzrahmen (64) befestigt ist. Erfindungsgemäß und vorteilhafterweise wird hierdurch bei der Aufblasung des Airbagkissens (30) eine nach rückwärts gerichtete Verdrehung des Airbagkissens (30) verhindert. Dieses gewährleistet die genaue und funktionssichere Positionierung des Kopfbereiches des Airbagkissens (30) im vorgesehenen Entfaltungsbereich neben der Kopfstütze (62) des Sitzes (60). Weiterhin wird durch die direkte Befestigung des Airbagkissens (30) am Sitzrahmen (64) ein zeitiges Eingreifen der zweiten Befestigungsanordnung (38) erzielt, so dass jeder Ansatz einer nach rückwärts gerichteten Verdrehung des Airbagkissens (30) vermieden wird. Damit verbleibt das untere Ende des Airbagkissens (30) auch beim aufblasen des Airbagkissens (30) in der Nähe des Gasgenerators (20).

Gut zu sehen ist in der **Fig. 1** ein am unteren Befestigungsbolzen (22) angebrachter Riemen (50), der dort mit seinem zweiten Ende (54) befestigt ist. Durch den hier befestigten Riemen (50) wird bei der Aufblasung des Airbagkissens (30) eine nach unten gerichtete Kraft erzeugt, die das Airbagkissen (30) nach unten zieht und so ebenfalls eine nach rückwärts gerichtete Verdrehung des Airbagkissens (30) verhindert. Dieses gewährleistet die genaue und funktionssichere Positionierung des Kopfbereiches des Airbagkissens (30) im vorgesehenen Entfaltungsbereich neben der Kopfstütze (62) des Sitzes.

Weiterhin ist hier gut zu erkennen, dass die Airbagvorrichtung (10) innerhalb der Polsterung (68) angeordnet und von dieser umgeben ist, so dass die Airbagvorrichtung (10) nicht von der Polsterung (68) hervorsteht und damit der Sitzkomfort durch die Airbagvorrichtung (10) nicht beeinträchtigt wird.

Die Airbagvorrichtung (10) kann in einer Ausnehmung (67) der Polsterung (68) angeordnet werden, wie nachfolgend unter Bezugnahme auf die **Fig. 2** beschrieben, sie kann aber auch eine separate Umhüllung oder Abdeckung aufweisen (hier nicht dargestellt) und mit dieser in der Polsterung (68) integriert werden. Es gibt viele verschiedene Möglichkeiten, die Airbagvorrichtung (10) in der Polsterung (68) anzuordnen, die dem Fachmann bekannt sind, so dass an dieser Stelle darauf nicht weiter eingegangen werden muss.

In der **Fig. 2** ist ein Schnitt durch den Sitzrahmen (64) der **Fig. 1** entlang der Linie **A-A** dargestellt. Der Sitzrahmen (64) weist an seiner Außenseite, also an der Seite die zum benachbarten Sitz zeigt, eine Polsterung (68) auf, in welcher in einer Ausnehmung (67) die Airbagvorrichtung (10) angeordnet ist, und die mit einem Bezug (66) versehen ist. Die Airbagvorrichtung (10) weist einen Gasgenerator (20), ein Airbagkissens (30) sowie eine erste Befestigungsanordnung (22) in Form von Befestigungsbolzen (22) auf.

Die Befestigungsbolzen (22) sind am Gasgenerator (20) angeordnet, und der Gasgenerator (20) ist innerhalb einer Kammer (34) des Airbagkissens (30) angeordnet. Mit den Befestigungsbolzen (22) ist der Gasgenerator (20), und damit die gesamte Airbagvorrichtung (10), am Sitzrahmen (64) angeordnet und befestigt. Als besonders vorteilhaft ist hier anzusehen, dass die Airbagvorrichtung (10) nur wenige Bauteile aufweist, die auf einfache Weise miteinander verbunden werden können, und dass die Airbagvorrichtung (10) schnell und einfach an dem Sitzrahmen (64) angebracht und mit diesem fest verbunden werden kann. Dieses vereinfacht und erleichtert den Zusammenbau sowie den Einbau der Airbagvorrichtung (10), und reduziert zudem die Kosten.

Gut zu erkennen ist hier ein Riemen (50), der mit einem zweiten Ende (54) an dem Befestigungsbolzen (22) angebracht ist, und mit einem ersten Ende (52) an dem unteren Rand des Airbagkissens (30).

Ebenfalls gut zu erkennen ist hier, dass die Faltung des Airbagkissens (30) vor dem Gasgenerator (20) nach vorne in Fahrtrichtung (in Fig. 2 nach oben) weisend angeordnet ist. Damit kann sich das Airbagkissen (30) nach der Auslösung des Gasgenerator (20) einfach nach vorne und oben entfalten und so unbehindert die Funktion eines FCA erfüllen.

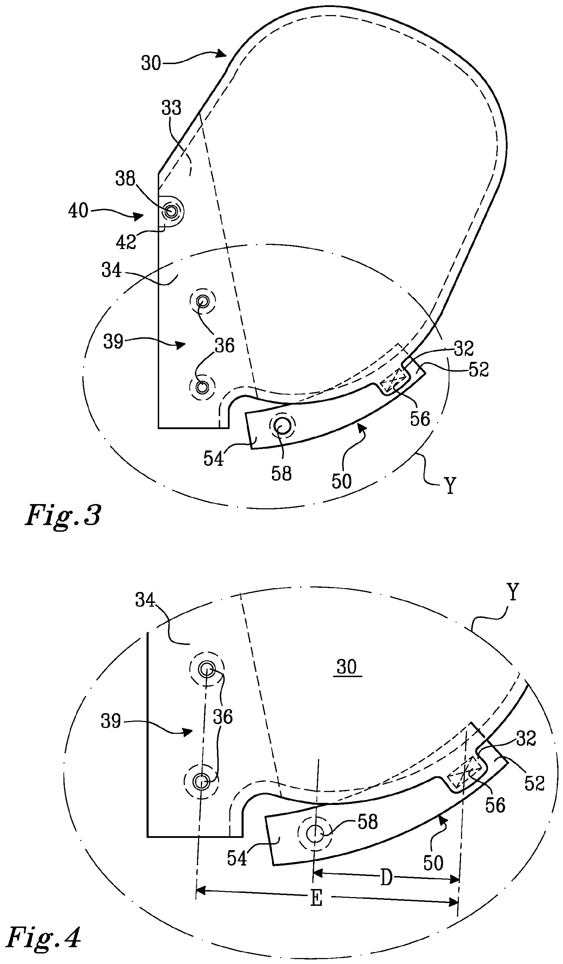

Die **Fig. 3** zeigt eine Ansicht eines Airbagkissens (30) gemäss einer ersten Ausführungsform mit einer zweiten Befestigungsanordnung (38) im Seitenbereich (33). Das Airbagkissens (30) hat eine integrierte Kammer (34), in welcher ein Gasgenerator (nicht dargestellt) angeordnet werden kann, und die zwei als Befestigungslöcher (36) ausgebildete zweite Befestigungsausnehmungen (36) aufweist. Am unteren Rand (32) des Airbagkissens (30) ist ein Riemen (50) an einem Anbringungspunkt (56) angebracht.

Gut zu erkennen ist hier, dass die zweite Befestigungsanordnung (38), die als Befestigungsausnehmung (38) bzw. Befestigungsloch (38) ausgebildet ist, oberhalb der Befestigungslöcher (36) angeordnet ist. Deutlich ist hier ebenfalls, dass die Befestigungslöcher (36) im Verbindungsbereich (39) der ersten Befestigungsanordnung (22) mit dem Airbagkissens (30) angeordnet sind.

Der Verbindungsbereich (39) ist der Bereich der Airbagvorrichtung (10), in dem der Gasgenerator (20) und das Airbagkissen (30) miteinander verbunden werden, und der am Sitzrahmen (64) angeordnet und befestigt wird. Hierzu wird ein Gasgenerator (20) in die Kammer (34) eingeführt und so darin angeordnet, dass am Gasgenerator (20) angeordnete Befestigungsbolzen (22) durch die Befestigungslöcher (36) aus der Kammer (34) herausgeführt werden, um am Sitzrahmen (64) zur Befestigung der Airbagvorrichtung (10) angeordnet und befestigt zu werden. Die Befestigungslöcher (36) sind hier auf einer Seite der Kammer (34) angeordnet, die zum Sitzrahmen (64) weist. Die andere Seite der Kammer (34), die vom Sitzrahmen (64) weg weist, d.h. die Seite, die zum benachbarten Sitz gerichtet ist, ist geschlossen und weist keine Befestigungsausnehmung oder Befestigungslöcher auf.

Durch diese erfindungsgemäße und vorteilhafte Anordnung einer zweiten Befestigungsanordnung (38) bzw. Befestigungsausnehmung (38) oberhalb der Befestigungslöcher (36) der ersten Befestigungsanordnung wird ein zusätzlicher Befestigungspunkt (40) für das Airbagkissen (30) zur Verfügung gestellt, der die Stabilität und die Positionierungsgenauigkeit des Airbagkissens (30) deutlich erhöht. Insbesondere wird damit erreicht, dass der Kopfbereich des Airbagkissens (30) im vorgesehenen Entfaltungsbereich neben der Kopfstütze (62) des Sitzes (60) positioniert wird, und damit die Funktionsfähigkeit der erfindungsgemäßen Airbagvorrichtung (10) gewährleistet.

Dieser zusätzliche, durch die Befestigungsausnehmung (38) gebildete Befestigungspunkt (40) verhindert bei der Aufblasung des Airbagkissens (30) eine nach rückwärts gerichtete Verdrehung des Airbagkissens (30), so dass die genaue und funktionssichere Positionierung des Kopfbereiches des Airbagkissens (30) im vorgesehenen Entfaltungsbereich neben der Kopfstütze (62) des Sitzes (60) gewährleistet wird. Zudem wird durch die direkte Anbringung des Airbagkissens (30) am Sitzrahmen (64) mittels der zweiten Befestigungsanordnung (38) ein zeitiges Eingreifen der zweiten Befestigungsanordnung (38) erzielt, so dass jeder Ansatz einer nach rückwärts gerichteten Verdrehung des Airbagkissens (30) vermieden wird.

Der Riemen (50) ist hier ein separates Bauteil, und ist mit seinem ersten Ende (52) mit seinem Anbringungspunkt (56) am unteren Rand (32) des Airbagkissens (30) angebracht. An seinem zweiten Ende (54) weist der Riemen (50) eine erste Befestigungsausnehmung (58) auf, die als Befestigungsloch (58) ausgebildet ist und in ihren Abmessungen mit den zweiten Befestigungsausnehmungen bzw. Befestigungslöchern (36) des Airbagkissens (30) übereinstimmt.

Die Abmessungen der Befestigungslöcher (36) und (58) sind hierbei so gewählt, dass sie mit den Abmessungen von hier nicht dargestellten Befestigungsbolzen übereinstimmen, so dass die Befestigungslöcher (36) und (58) zur Befestigung des Airbagkissens (30) mit dem nicht dargestellten Befestigungsbolzen zusammenwirken können.

Die **Fig. 4** zeigt eine vergrößerte Ansicht des Details **Y** der **Fig. 3****.** Der Riemen (50) ist mit seinem ersten Ende (52) mit seinem Anbringungspunkt (56) am unteren Rand (32) des Airbagkissens (30) durch vernähen angebracht.

Die Abmessungen des Riemens (50) sowie die Anordnung des Anbringungspunkts (56) und dessen Anbringung am unteren Rand (32) des Airbagkissens (30) sind dabei so gewählt, dass der Abstand **D** zwischen dem Anbringungspunkt (56) am ersten Ende (52) des Riemens (50) und dem ersten Befestigungsloch (58) am zweiten Ende (54) des Riemens (50) kleiner ist als der Abstand **E** zwischen dem Anbringungspunkt (56) am ersten Ende (52) des Riemens (50) und den zweiten Befestigungslöchern (36) in der Kammer (34) des Airbagkissens (30).

Zum Zusammenbau der Airbagvorrichtung (10) wird zunächst ein Gasgenerator (20) (hier nicht dargestellt) in die Kammer (34) des Airbagkissens (30) eingeführt, wobei die am Gasgenerator (20) angeordneten Befestigungsbolzen (22) durch die zweiten Befestigungslöcher (36) aus der Kammer (34) herausgeführt werden. Anschließend wird der Riemen (50) mit seinem ersten Befestigungsloch (58) am unteren Befestigungsbolzen (22), der aus dem unteren zweiten Befestigungsloch (36) hervorsteht, befestigt. Abschließend wird das Airbagkissen (30) in der oben beschriebenen und dargestellten Weise zusammengefaltet, bevor die derart zusammengebaute Airbagvorrichtung (10) in der ebenfalls oben beschriebenen und dargestellten Weise an einem Sitzrahmen (64) (hier nicht dargestellt) angeordnet und befestigt wird.

Durch diese erfindungsgemäße und vorteilhafte Ausgestaltung wird ein zusätzlicher Befestigungspunkt für das Airbagkissen (30) zur Verfügung gestellt, der die Stabilität und die Positionierungsgenauigkeit des Airbagkissens (30) deutlich erhöht. Insbesondere wird damit erreicht, dass der Kopfbereich des Airbagkissen (30) zuverlässig im vorgesehenen Entfaltungsbereich neben der Kopfstütze (62) des Sitzes (60) positioniert wird, und damit die Funktionsfähigkeit der erfindungsgemäßen Airbagvorrichtung (10) gewährleistet.

Als besonders vorteilhaft ist hier anzusehen, dass durch diese erfindungsgemäße und vorteilhafte Ausgestaltung des Airbagkissens (30) bei der Aufblasung des Airbagkissens (30) eine nach unten gerichtete Kraft erzeugt wird, die das Airbagkissens (30) nach unten zieht und so eine nach rückwärts gerichtete Verdrehung des Airbagkissens (30) verhindert. Dieses gewährleistet zusammen mit der zweiten Befestigungsanordnung (38) die genaue und funktionssichere Positionierung des Kopfbereiches des Airbagkissens (30) im vorgesehenen Entfaltungsbereich neben der Kopfstütze (62) des Sitzes.

Ein weiterer Vorteil dieser erfindungsgemäßen und vorteilhaften Ausgestaltung des Airbagkissens (30) ist dass hierdurch erzielte zeitige Eingreifen bzw. Erzeugen der nach unten gerichteten Kraft. Damit wird jeder Ansatz einer nach rückwärts gerichteten Verdrehung des Airbagkissens (30) vermieden. Zudem ist der Riemen (50) vorteilhafterweise und erfindungsgemäß kurz ausgeführt, so dass das untere Ende des Airbags (30) auch beim Aufblasen des Airbags (30) in der Nähe des Gasgenerators (20) verbleibt.

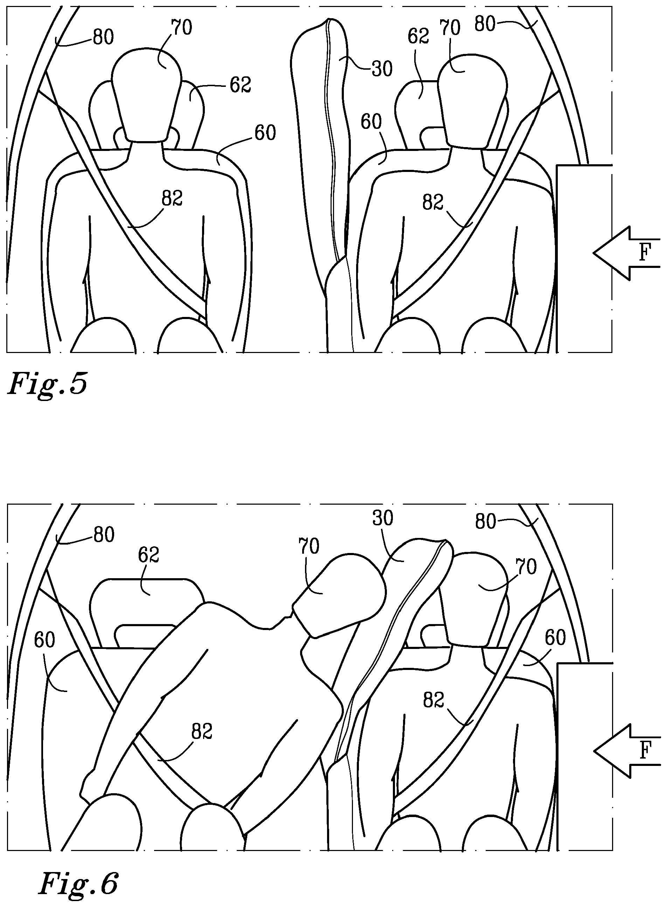

Die Wirkungsweise der Airbagvorrichtung (10) wird nun schematisch unter Bezugnahme auf die **Fig. 5** und die **Fig. 6** dargestellt.

Die **Fig. 5** zeigt in einer Ansicht von vorne schematisch die Karosserie (80) eines Kraftfahrzeugs. In der Karosserie (80) sind zwei Sitze (60) nebeneinander angeordnet, die einen Fahrersitz bzw. Beifahrersitz darstellen. Auf jedem Sitz (60) ist eine Autocrashpuppe (70) angeordnet, die mittels an der Karosserie (80) befestigten Sicherheitsgurten (82) so auf dem Sitz (60) festgehalten werden, dass die Köpfe der Autocrashpuppen (70) an die Kopfstützen (62) der Sitze (60) anstoßen.

In dieser Testanordnung wird nun ein Seitenaufprall simuliert, indem eine seitliche Kraft **F** auf die Karosserie (80) aufgebracht wird.

Dargestellt ist in der **Fig. 5** der Moment direkt nach Aufbringung der Seitenkraft **F.** Der Seitenaufprall hat die Airbagvorrichtung (10) (hier nicht dargestellt) ausgelöst, so dass der hier ebenfalls nicht dargestellte Gasgenerator (20) aktiviert wurde und den FCA bzw. das Airbagkissen (30) voll aufgeblasen hat. Der Beifahrer bzw. die Autocrashpuppe (70) (links in der Fig. 5) ist von dem Seitenaufprall noch unbeeinflusst und sitzt unverändert auf ihrem Stuhl (60) und wird von dem Sicherheitsgurt (82) auf dem Stuhl (60) so gehalten, dass der Kopf an der Kopfstütze (62) anliegt.

Der Fahrer bzw. die Autocrashpuppe (70) (rechts in der Fig. 5) hingegen hat schon eine durch den Seitenaufprall ausgelöste Bewegung nach rechts in die Gegenrichtung des Seitenaufpralls begonnen, wird aber durch den Sicherheitsgurt (82) auf dem Sitz (60) festgehalten.

Das Airbagkissen (30) befindet sich voll aufgeblasen zwischen den beiden Insassen bzw. Autocrashpuppen (70) und erstreckt sich in Richtung auf das Karosseriedach über die Kopfhöhe der Autocrashpuppen (70). Wie hier gut zu erkennen ist, befindet sich das Airbagkissens (30) mit seinem Kopfbereich im vorgesehenen Entfaltungsbereich zwischen den beiden Sitzen, wobei es sich über die Kopfhöhe hinaus in Richtung auf das Fahrzeuginnendach hin erstreckt. Dieses gewährleistet die sichere Funktion des FCA bei einem Seitenaufprall, wie nachfolgend unter Bezugnahme auf die **Fig. 6** deutlich werden wird.

In der **Fig. 6** ist ein Moment im weiteren Verlauf des Seitenaufpralls dargestellt, in dem der Beifahrer bzw. die linke Autocrashpuppe (70) ebenfalls eine durch den Seitenaufprall ausgelöste Bewegung nach rechts in die Gegenrichtung der aufgebrachten Kraft F des Seitenaufpralls durchgeführt hat und durch das Airbagkissens (30) gestoppt wurde. Der Sicherheitsgurt (82) kann diese seitliche Bewegung der Autocrashpuppe (70) nicht stoppen oder abbremsen, da er nur für das Stoppen oder Abbremsen einer nach vorne gerichteten Bewegung ausgelegt ist. Durch die Gestaltung und Positionierung des Airbagkissens (30) wird die Bewegung der Autocrashpuppe (70) jedoch abgebremst bzw. aufgefangen, wobei sowohl der Kopf und Oberkörper des Beifahrers (der linken Autocrashpuppe (70)) als auch der Kopf und Oberkörper des Fahrers (der rechten Autocrashpuppe (70)) bei dem Seitenaufprall geschützt wird.

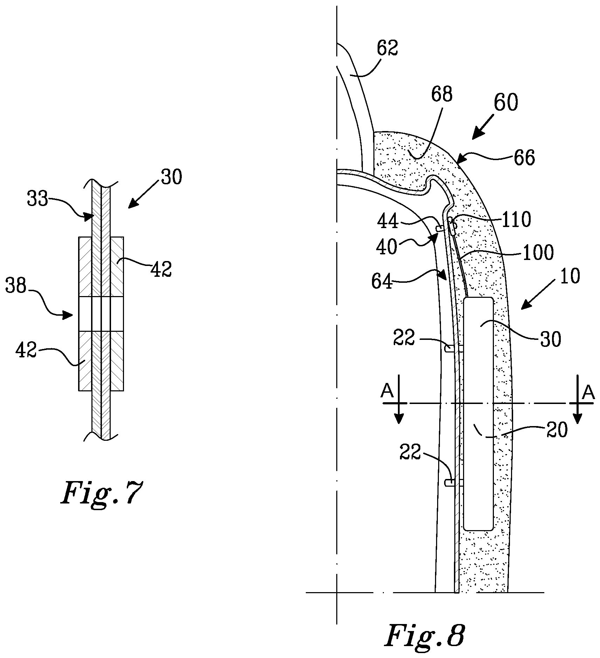

In der **Fig. 7** ist ein Schnitt durch die zweite Befestigungsanordnung (38) bzw. Befestigungsausnehmung (38) der **Fig. 3** schematisch dargestellt. Im Seitenbereich (33) des Airbagkissens (30) liegen die beiden Seiten des Airbagkissens (30) direkt aufeinander auf, wobei, wie hier gut zu sehen ist, das Airbagkissen (30) ein so genanntes 2D-Airbagkissen ist, d.h. ein Airbagkissen mit zwei Seiten oder zwei Lagen.

Die Befestigungsausnehmung (38) erstreckt sich durch die beiden Seiten bzw. Lagen des Airbagkissens (30) und bildet somit ein Durchgangsloch. Um das Durchgangsloch bzw. die Befestigungsausnehmung (38) herum ist auf beiden Seiten im Randbereich jeweils ein Verstärkungsmaterial (42) angebracht, um das Durchgangsloch bzw. die Befestigungsausnehmung (38) zu verstärken. Das Verstärkungsmaterial (42) kann mit dem Airbagkissen (30) vernäht oder verklebt sein.

Anzumerken ist an dieser Stelle, dass die Befestigungsausnehmung (38) der zweiten Befestigungsanordnung (38) wie erwähnt ein Durchgangsloch bildet, und sich somit durch beide Seiten bzw. Lagen des Airbagkissens (30) erstreckt. Im Gegensatz hierzu erstrecken sich die zweiten Befestigungsausnehmung (36) der ersten Befestigungsanordnung (22) nur durch eine Seite bzw. eine Lage des Airbagkissens (30), um die am Gasgenerator (20) angeordneten Befestigungsbolzen (22) der ersten Befestigungsanordnung (22) aus der Kammer (34) des Airbagkissens (30) zum Verbindungsbereich (39) zu führen.

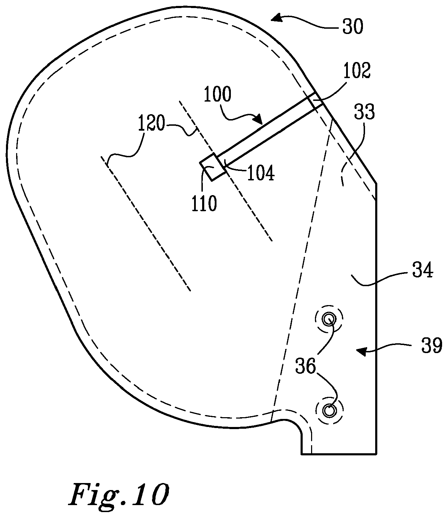

Die **Fig. 8** zeigt eine Teilansicht im Aufriss des Fahrersitzes (60) eines Kraftfahrzeugs von hinten, mit einer am Sitzrahmen (64) angeordneten Airbagvorrichtung (10) gemäss einer zweiten Ausführungsform. Diese Teilansicht ist ein Schnitt entlang der Linie **B-B** in der **Fig. 10****.** Dargestellt ist hier zur Vereinfachung nur der Teil des Sitzrahmens (64), an dem die Airbagvorrichtung (10) angeordnet ist. Am oberen Ende des Sitzrahmen (64) ist eine Kopfstütze (62) angeordnet, und an der nach außen zum benachbarten Sitz weisenden Seite des Sitzrahmens (64) ist eine Polsterung (68) angebracht, die mit einem Bezug (66) bezogen ist.

Die Airbagvorrichtung (10) ist mittels zweier Bolzen (22) am Sitzrahmen (64) angeordnet und befestigt, und weist neben den zwei Bolzen (22) ein Airbagkissen (30) sowie einen Gasgenerator (20) auf. Der Gasgenerator (20) ist innerhalb des Airbagkissens (30) angeordnet, so dass in dieser Darstellung nur die Außenseite des den Gasgenerator (20) umgebenden Airbagkissens (30) zu sehen ist.

Am oberen Ende der Airbagvorrichtung (10) ist weiterhin ein Bolzen (44) zu sehen, der ebenfalls am Sitzrahmen (64) angeordnet und befestigt ist. An diesem Bolzen (44), der oberhalb der Bolzen (22) im oberen Seitenbereich des Sitzrahmens (64) angeordnet ist, ist das Airbagkissen (30) mit einer zweiten Befestigungsanordnung (100) in Form eines Riemens (100) befestigt. Eine Befestigungsvorrichtung bzw. ein Bügel (110) am Riemen (100) ist hier ausgebildet, um mit dem Bolzen (44) zu Befestigung des Riemens (100) zusammenzuwirken.

Wie weiter unten erläutert wird, wird auf diese Weise ein zusätzlicher Befestigungspunkt (40) zur Verfügung gestellt, an dem das Airbagkissen (30) direkt mit dem Sitzrahmen (64) verbunden bzw. an dem Sitzrahmen (64) befestigt ist. Erfindungsgemäß und vorteilhafterweise wird hierdurch bei der Aufblasung des Airbagkissens (30) eine nach rückwärts gerichtete Verdrehung des Airbagkissens (30) verhindert. Dieses gewährleistet die genaue und funktionssichere Positionierung des Kopfbereiches des Airbagkissens (30) im vorgesehenen Entfaltungsbereich neben der Kopfstütze (62) des Sitzes (60). Weiterhin wird durch die direkte Befestigung des Airbagkissens (30) am Sitzrahmen (64) ein zeitiges Eingreifen der zweiten Befestigungsanordnung (100) erzielt, so dass jeder Ansatz einer nach rückwärts gerichteten Verdrehung des Airbagkissens (30) vermieden wird. Damit verbleibt das untere Ende des Airbagkissens (30) auch beim aufblasen des Airbagkissens (30) in der Nähe des Gasgenerators (20). Weiterhin ist hier gut zu erkennen, dass die Airbagvorrichtung (10) innerhalb der Polsterung (68) angeordnet und von dieser umgeben ist, so dass die Airbagvorrichtung (10) nicht von der Polsterung (68) hervorsteht und damit der Sitzkomfort durch die Airbagvorrichtung (10) nicht beeinträchtigt wird.

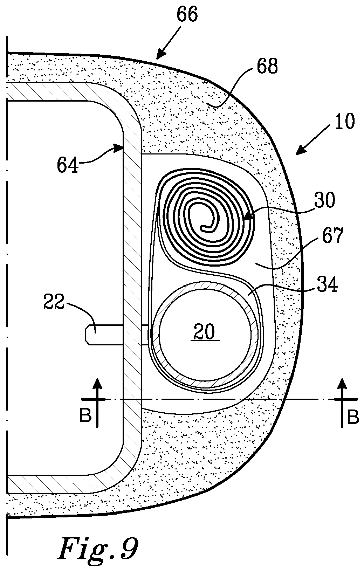

Die Airbagvorrichtung (10) kann in einer Ausnehmung (67) der Polsterung (68) angeordnet werden, wie nachfolgend unter Bezugnahme auf die **Fig. 9** beschrieben, sie kann aber auch eine separate Umhüllung oder Abdeckung aufweisen (hier nicht dargestellt) und mit dieser in der Polsterung (68) integriert werden. Es gibt viele verschiedene Möglichkeiten, die Airbagvorrichtung (10) in der Polsterung (68) anzuordnen, die dem Fachmann bekannt sind, so dass an dieser Stelle darauf nicht weiter eingegangen werden muss.

In der **Fig. 9** ist ein Schnitt durch den Sitzrahmen (64) der **Fig. 8** entlang der Linie **A-A** dargestellt. Der Sitzrahmen (64) weist an seiner Außenseite, also an der Seite die zum benachbarten Sitz zeigt, eine Polsterung (68) auf, in welcher in einer Ausnehmung (67) die Airbagvorrichtung (10) angeordnet ist, und die mit einem Bezug (66) versehen ist. Die Airbagvorrichtung (10) weist einen Gasgenerator (20), ein Airbagkissens (30) sowie eine erste Befestigungsanordnung (22) in Form von Befestigungsbolzen (22) auf.

Die Befestigungsbolzen (22) sind am Gasgenerator (20) angeordnet, und der Gasgenerator (20) ist innerhalb einer Kammer (34) des Airbagkissens (30) angeordnet. Mit den Befestigungsbolzen (22) ist der Gasgenerator (20), und damit die gesamte Airbagvorrichtung (10), am Sitzrahmen (64) angeordnet und befestigt. Als besonders vorteilhaft ist hier anzusehen, dass die Airbagvorrichtung (10) nur wenige Bauteile aufweist, die auf einfache Weise miteinander verbunden werden können, und dass die Airbagvorrichtung (10) schnell und einfach an dem Sitzrahmen (64) angebracht und mit diesem fest verbunden werden kann. Dieses vereinfacht und erleichtert den Zusammenbau sowie den Einbau der Airbagvorrichtung (10), und reduziert zudem die Kosten.

Gut zu erkennen ist hier, dass das Airbagkissens (30) zusammengerollt vor dem Gasgenerator (20) in der Ausnehmung (67) nach vorne in Fahrtrichtung (in **Fig. 9** nach oben) weisend angeordnet ist. Damit kann sich das Airbagkissen (30) nach der Auslösung der Airbagvorrichtung (10) nach vorne und oben hin entfalten, und sich so genau und funktionssicher im vorgesehenen Entfaltungsbereich neben der Kopfstütze (62) des Sitzes (60) entfalten und so unbehindert die Funktion eines FCA erfüllen.

Die **Fig. 10** zeigt eine Ansicht eines Airbagkissens (30) gemäss einer zweiten Ausführungsform, mit einer zweiten Befestigungsanordnung (100) gemäss einer zweiten Ausführungsform, im Seitenbereich (33). Das Airbagkissens (30) hat eine integrierte Kammer (34), in welcher ein Gasgenerator (nicht dargestellt) angeordnet werden kann, und die zwei als Befestigungslöcher (36) ausgebildete zweite Befestigungsausnehmungen (36) aufweist.

Gut zu erkennen ist hier, dass die zweite Befestigungsanordnung (100), die als Zugelement (100) bzw. Riemen (100) ausgebildet ist, oberhalb der Befestigungslöcher (36) angeordnet ist. Hierzu ist das erste Ende (102) des Riemens (100) im Randbereich bzw. Seitenbereich (33) des Airbagkissens (100) angeordnet und befestigt. An seinem zweiten Ende (104) weist der Riemen (100) eine Befestigungsvorrichtung (110) auf, die als Bügel (110) ausgebildet ist und an einer vorgesehenen Stelle an einem Sitzrahmen befestigt werden kann. Dieses zweite Ende (104) des Riemens (100) ist frei und kann somit ohne Behinderungen leicht und einfach bei der Montage der Airbagvorrichtung (10) an der vorgesehenen Stelle des Sitzrahmens (64) angebracht werden, um den zusätzlichen Befestigungspunkt (40) der Airbagvorrichtung (10) zu bilden.

Deutlich ist hier ebenfalls, dass die Befestigungslöcher (36) im Verbindungsbereich (39) des Airbagkissens (30) mit der ersten Befestigungsanordnung (hier nicht dargestellt) angeordnet sind.

Der Verbindungsbereich (39) ist der Bereich der Airbagvorrichtung (10), in dem der Gasgenerator (20) und das Airbagkissen (30) miteinander verbunden werden, und der am Sitzrahmen (64) angeordnet und befestigt wird. Hierzu wird ein Gasgenerator (20) in die Kammer (34) eingeführt und so darin angeordnet, dass am Gasgenerator (20) angeordnete Befestigungsbolzen (22) durch die Befestigungslöcher (36) aus der Kammer (34) herausgeführt werden, um am Sitzrahmen (64) zur Befestigung der Airbagvorrichtung (10) angeordnet und befestigt zu werden. Die Befestigungslöcher (36) sind hier auf einer Seite der Kammer (34) angeordnet, die zum Sitzrahmen (64) weist. Die andere Seite der Kammer (34), die vom Sitzrahmen (64) weg weist, d.h. die Seite, die zum benachbarten Sitz gerichtet ist, ist geschlossen und weist keine Befestigungsausnehmung oder Befestigungslöcher auf.

Die Abmessungen der Befestigungslöcher (36) sind hierbei so gewählt, dass sie mit den Abmessungen von hier nicht dargestellten Befestigungsbolzen der ersten Befestigungsanordnung übereinstimmen, so dass die Befestigungslöcher (36) zur Befestigung des Airbagkissens (30) mit dem nicht dargestellten Befestigungsbolzen zusammenwirken können.

Durch diese erfindungsgemäße und vorteilhafte Anordnung einer zweiten Befestigungsanordnung (100) oberhalb der Befestigungslöcher (36) der ersten Befestigungsanordnung wird ein zusätzlicher Befestigungspunkt (40) für das Airbagkissen (30) zur Verfügung gestellt, der die Stabilität und die Positionierungsgenauigkeit des Airbagkissens (30) deutlich erhöht. Insbesondere wird damit erreicht, dass der Kopfbereich des Airbagkissens (30) im vorgesehenen Entfaltungsbereich neben der Kopfstütze (62) des Sitzes (60) positioniert wird, und damit die Funktionsfähigkeit der erfindungsgemäßen Airbagvorrichtung (10) gewährleistet.

Dieser zusätzliche, durch die Befestigungsvorrichtung (110) bzw. den Bügel (110) gebildete Befestigungspunkt (40) verhindert bei der Aufblasung des Airbagkissens (30) eine nach rückwärts gerichtete Verdrehung des Airbagkissens (30), so dass die genaue und funktionssichere Positionierung des Kopfbereiches des Airbagkissens (30) im vorgesehenen Entfaltungsbereich neben der Kopfstütze (62) des Sitzes (60) gewährleistet wird. Zudem wird durch die direkte Anbringung des Airbagkissens (30) am Sitzrahmen (64) mittels der zweiten Befestigungsanordnung (100) ein zeitiges Eingreifen der zweiten Befestigungsanordnung (100) erzielt, so dass jeder Ansatz einer nach rückwärts gerichteten Verdrehung des Airbagkissens (30) vermieden wird.

Weiterhin sind in der **Fig. 10** Haltemittel (120) zu erkennen, die als Halteseile (120) oder Halteriemen (120) ausgebildet sind, und innerhalb des Airbagkissens (30) angeordnet sind. Hier sind die Befestigungspunkte eines Endes der Halteseile (120) mit einer Seitenwand des Airbagkissens (30) dargestellt. Die Halteseile (120) sind mit ihrem anderen Ende an der gegenüberliegenden Seitenwand des Airbagkissens (30) befestigt, so dass die sich gegenüberliegenden Seiten des Airbagkissens (30) beim aufblasen des Airbagkissens (30) mit einem vorgegebenen Abstand voneinander anordnen.

Damit kann ein Airbagkissen (30) mit großem Volumen zur Verfügung gestellt werden, ein so genanntes 3D Airbagkissen, bei dem die Seitenwände des Airbagkissens (30) nur an den Rändern zur Bildung des Airbagkissens (30) miteinander verbunden bzw. vernäht sind. Im Mittenbereich des Airbagkissens (30) sind die Seitenwände jedoch nicht direkt miteinander verbunden, hier werden sie beim aufblasen des Airbagkissens (30) durch die Haltemittel (120), vorzugsweise in Form von Halteseilen (120) oder Halteriemen (120), mit einem vorbestimmten Abstand voneinander gehalten. Damit wird vermieden, dass die Köpfe der Insassen auf den durch das aufgeblasene Airbagkissen (30) getrennten Sitzen (60) trotz aufgeblasenem Airbagkissen (30) aufeinandertreffen. Währen die Seitenwände des Airbagkissens (30) im Mittenbereich direkt miteinander vernäht, wäre hier nicht genügend Volumen zur Vermeidung des Zusammentreffens der Köpfe der Insassen.

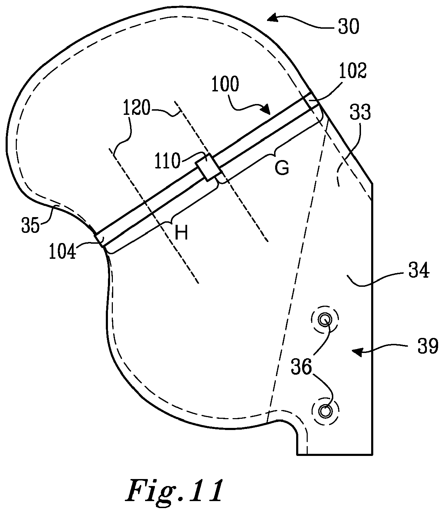

Die **Fig. 11** zeigt eine Ansicht eines Airbagkissens (30) gemäss einer zweiten Ausführungsform, mit einer zweiten Befestigungsanordnung (100) gemäss einer drittenAusführungsform, im Seitenbereich (33). Das Airbagkissens (30) hat eine integrierte Kammer (34), in welcher ein Gasgenerator (nicht dargestellt) angeordnet werden kann, und die zwei als Befestigungslöcher (36) ausgebildete zweite Befestigungsausnehmungen (36) aufweist.

Gut zu erkennen ist hier, dass die zweite Befestigungsanordnung (100), die als Zugelement (100) bzw. Riemen (100) ausgebildet ist, oberhalb der Befestigungslöcher (36) angeordnet ist. Hierzu ist das erste Ende (102) des Riemens (100) im Randbereich bzw. Seitenbereich (33) des Airbagkissens (100) angeordnet und befestigt.

Das zweite Ende (104) des Riemens (100) ist am gegenüberliegenden Randbereich bzw. Seitenbereich (35) des Airbagkissens (30) angeordnet und befestigt. Gut zu erkennen ist hier, dass die Länge des Zugelementes (100) geringer ist als die Breite des Airbagkissens (30). Dadurch wird beim aufblasen des Airbagkissens (30) eine Gegenkraft erzeugt, die eine Rotation des aufgeblasenen Airbagkissens (30) verhindert und den Kopfbereich des aufgeblasenen Airbagkissens (30) im vorgesehenen Entfaltungsbereich neben der Kopfstütze (62) des Sitzes (60) positioniert. Damit wird die Funktionsfähigkeit der erfindungsgemäßen Airbagvorrichtung (10) gewährleistet.

In seinem Mittenbereich weist der Riemen (100) eine Befestigungsvorrichtung (110) in Form eines Bügels (110) auf, die an einer vorgesehenen Stelle an einem Sitzrahmen (64) befestigt werden kann, um den zusätzlichen Befestigungspunkt (40) der Airbagvorrichtung (10) zu bilden.

Gut zu erkennen ist hier, dass der Bügel (110) so am Zugelement bzw. Riemen (100) angeordnet ist, dass der Abstand (G) zwischen Bügel (110) und dem ersten Ende (102) geringer ist als der Abstand (H) zwischen Bügel (110) und dem zweiten Ende (104).

Durch diese erfindungsgemäße und vorteilhafte Anordnung des Bügels (110) kann bei der Montage des Airbagkissens (30) bzw. der Airbagvorrichtung (10) ein zusätzlicher Befestigungspunkt für das Airbagkissens (30) zur Verfügung gestellt werden, der die Stabilität und die Positionierungsgenauigkeit des Airbagkissens (30) deutlich erhöht. Insbesondere wird damit erreicht, dass der Kopfbereich des Airbagkissens (30) im vorgesehenen Entfaltungsbereich neben der Kopfstütze (62) des Sitzes (60) positioniert wird, und damit die Funktionsfähigkeit der erfindungsgemäßen Airbagvorrichtung (10) gewährleistet.

Zudem wird durch die direkte Anbringung des Airbagkissens (30) am Sitzrahmen (64) mittels des Bügels (110) ein zeitiges Eingreifen der zweiten Befestigungsanordnung (100) erzielt, so dass jeder Ansatz einer nach rückwärts gerichteten Verdrehung des Airbagkissens (30) vermieden wird.

Weiterhin wird hierdurch auch eine Stabilisierung des Airbagkissens (30) in Seitenrichtung erzielt, so dass eine seitliches wegklappen des aufgeblasenen Airbagkissens (30) verhindert wird. Damit behält das aufgeblasene Airbagkissen (30) seine Position im vorgesehenen Anwendungsbereich seitlich neben dem Sitz (60), so dass die Zuverlässigkeit und Funktionsfähigkeit weiter verbessert wird.

**Bezugszeichenliste**

| | | | |
|---|---|---|---|
| **10** | Airbagvorrichtung | **70** | Autocrashpuppe |
| **20** | Gasgenerator | **80** | Karosserie |
| **22** | erste Befestigungsanordnung / Befestigungsbolzen | **82** | Sicherheitsgurt |
| **30** | Airbagkissen | **100** | zweite Befestigungsanordnung Zugelement |
| **32** | unterer Rand Airbagkissen | **102** | erstes Ende Zugelement |
| **33** | Seitenbereich Airbagkissen | **104** | zweites Ende Zugelemer |
| **34** | Kammer Airbagkissen | **110** | Befestigungsvorrichtung |
| **35** | Seitenbereich Airbagkissen | **120** | Haltemittel / Halteseil |
| **36** | zweite Befestigungsausnehmung | **A** | Ansicht A-A |
| **38** | zweite Befestigungsanordnung / Befestigungsausnehmung | **B** | Ansicht B-B |
| **39** | Verbindungsbereich | **D** | Abstand D |
| **40** | zusätzlicher Befestigungspunkt | **E** | Abstand E |
| **42** | Verstärkungsmaterial | **F** | Seitenkraft |
| **44** | Bolzen / Schraube | **G** | Abstand G |
| **50** | Zugelement / Riemen | **H** | Abstand H |
| **52** | erstes Ende Zugelement | **Y** | Detail Airbagkissen |
| **54** | zweites Ende Zugelement | | |
| **56** | Anbringungspunkt | | |
| **58** | erste Befestigungsausnehmung | | |
| **60** | Sitz | | |
| **62** | Kopfstütze | | |
| **64** | Sitzrahmen | | |
| **66** | Bezug | | |
| **67** | Hohlraum | | |
| **68** | Polsterung | | |

## Patentansprüche

1. Airbagvorrichtung für ein Kraftfahrzeug, die an einem Sitzrahmen (64) angeordnet und befestigt werden kann, und die ausgebildet ist, den Kopf und den Brustkorb eines Insassen im Falle eines Seitenaufpralls oder Fahrzeugüberschlags zu schützen;
mit einem Gasgenerator (20);
mit einem Airbagkissen (30);
mit einer ersten Befestigungsanordnung (22), wobei die erste Befestigungsanordnung (22), der Gasgenerator (20) und das Airbagkissen (30) miteinander verbunden sind, um die Airbagvorrichtung (10) am Sitzrahmen (64) zu befestigen;
einem Zugelement (100), welches mit einem ersten Ende (102) im Seitenbereich (33) des Airbagkissens (30) oberhalb des Verbindungsbereiches (39) mit der ersten Befestigungsanordnung (22) angeordnet ist und mit einem zweiten Ende (104) am gegenüberliegenden Seitenbereich (35) des Airbagkissens (30) angeordnet ist,
**dadurch gekennzeichnet, dass** die Airbagvorrichtung (10) eine zweite Befestigungsanordnung aufweist, die im Seitenbereich (33) des Airbagkissens (30) oberhalb des Verbindungsbereiches (39) mit der ersten Befestigungsanordnung (22) angeordnet ist, und die ausgebildet ist, um das Airbagkissen (30) mit einem zusätzlichen Befestigungspunkt (40) am Sitzrahmen (64) oberhalb der ersten Befestigungsanordnung (22) zu befestigen,
wobei das Zugelement (100) Teil der zweiten Befestigungsanordnung ist,
und wobei weiterhin eine Befestigungsvorrichtung (110) am Zugelement (100) zwischen dem ersten Ende (102) und dem zweiten Ende (104) vorgesehen ist, um das Airbagkissen (30) mittels der Befestigungsvorrichtung (110) mit dem zusätzlichen Befestigungspunkt (40) am Sitzrahmen (64) oberhalb der ersten Befestigungsanordnung (22) zu befestigen.

2. Vorrichtung nach Anspruch 1, **dadurch gekennzeichnet, dass** die Befestigungsvorrichtung (110) so am Zugelement (100) angeordnet ist, dass der Abstand (G) zwischen Befestigungsvorrichtung (110) und erstem Ende (102) geringer ist als der Abstand (H) zwischen Befestigungsvorrichtung (110) und zweitem Ende (104).

3. Vorrichtung nach Anspruch 1 oder 2, **dadurch gekennzeichnet, dass** die Länge des Zugelementes (100) geringer ist als die Breite des Airbagkissens (30).

4. Vorrichtung nach einem der vorangehenden Ansprüche, **dadurch gekennzeichnet, dass** die Befestigungsvorrichtung (110) einen Bügel (110) aufweist, der am Sitzrahmen (64) angeschraubt, eingeklemmt oder eingehakt werden kann.

5. Vorrichtung nach einem der vorangehenden Ansprüche, **dadurch gekennzeichnet, dass** die Airbagvorrichtung (10) an der Seite des Sitzrahmens (64) angeordnet ist, die zum benachbarten Sitz (60) gerichtet ist.

6. Vorrichtung nach einem der vorangehenden Ansprüche, **dadurch gekennzeichnet, dass** der größte Teil des Airbagkissens (30) nach dem Auslösen der Airbagvorrichtung (10) oberhalb der Airbagvorrichtung (10) angeordnet ist.

7. Vorrichtung nach einem der vorangehenden Ansprüche, **dadurch gekennzeichnet, dass** die zweite Befestigungsanordnung Bolzen oder Schrauben (44) aufweist, die mit dem Sitzrahmen (64) zusammenwirken, um das Airbagkissen (30) am Sitzrahmen (64) zu befestigen.

8. Airbagkissen für eine Airbagvorrichtung (10) für ein Kraftfahrzeug, das an einem Sitzrahmen (64) angeordnet und befestigt werden kann, und das ausgebildet ist, um den Kopf und den Brustkorb eines Insassen im Falle eines Seitenaufpralls oder Fahrzeugüberschlags zu schützen;
wobei die Airbagvorrichtung (10) weiterhin einen Gasgenerator (20) und eine erste Befestigungsanordnung (22) aufweist, wobei die erste Befestigungsanordnung (22), der Gasgenerator (20) und das Airbagkissen (30) miteinander verbunden sind, um die Airbagvorrichtung (10) am Sitzrahmen (64) zu befestigen;
wobei die Airbagvorrichtung weiterhin ein Zugelement (100) aufweist, welches mit einem ersten Ende (102) im Seitenbereich (33) des Airbagkissens (30) oberhalb des Verbindungsbereiches (39) mit der ersten Befestigungsanordnung (22) angeordnet ist und mit einem zweiten Ende (104) am gegenüberliegenden Seitenbereich (35) des Airbagkissens (30) angeordnet ist,
**dadurch gekennzeichnet, dass** das Airbagkissen (30) eine zweite Befestigungsanordnung aufweist, die im Seitenbereich (33) des Airbagkissens (30) oberhalb des Verbindungsbereiches (39) mit der ersten Befestigungsanordnung (22) angeordnet ist, und die ausgebildet ist, um das Airbagkissen (30) mit einem zusätzlichen Befestigungspunkt (40) am Sitzrahmen (64) oberhalb der ersten Befestigungsanordnung (22) zu befestigen,
**dadurch gekennzeichnet, dass** das Zugelement (100) Teil der zweiten Befestigungsanordnung ist, wobei weiterhin eine Befestigungsvorrichtung (110) am Zugelement (100) zwischen dem ersten Ende (102) und dem zweiten Ende (104) vorgesehen ist, um das Airbagkissen (30) mittels der Befestigungsvorrichtung (110) mit dem zusätzlichen Befestigungspunkt (40) am Sitzrahmen (64) oberhalb der ersten Befestigungsanordnung (22) zu befestigen.

9. Airbagkissen nach Anspruch 8, **dadurch gekennzeichnet, dass** die Befestigungsvorrichtung (110) so am Zugelement (100) angeordnet ist, dass der Abstand (G) zwischen Befestigungsvorrichtung (110) und erstem Ende (102) geringer ist als der Abstand (H) zwischen Befestigungsvorrichtung (110) und zweitem Ende (104).

10. Airbagkissen nach Anspruch 8 oder 9, **dadurch gekennzeichnet, dass** die Länge des Zugelementes (100) geringer ist als die Breite des Airbagkissens (30).

11. Airbagkissen nach einem der Ansprüche 8 bis 10, **dadurch gekennzeichnet, dass** die Befestigungsvorrichtung (110) einen Bügel (110) aufweist, der am Sitzrahmen (64) angeschraubt, eingeklemmt oder eingehakt werden kann.

12. Airbagkissen nach einem der Ansprüche 8 bis 11, **dadurch gekennzeichnet, dass** das Airbagkissen (30) Haltemittel (120) aufweist, die innerhalb des Airbagkissens (30) angeordnet sind, um die Seitenwände des Airbagkissenss (30) beim Aufblasen des Airbagkissens (30) mit einem vorgegebenen Abstand voneinander anzuordnen.

## Claims

1. Airbag device for a motor vehicle, which can be arranged and attached on a seat frame (64), and which is designed to protect the head and chest of an occupant in the event of a side impact or vehicle rollover;
with a gas generator (20);
with an airbag cushion (30);
with a first attachment arrangement (22), wherein the first attachment arrangement (22), the gas generator (20) and the airbag cushion (30) are connected to one another in order to attach the airbag device (10) to the seat frame (64);
a tensile element (100) which is arranged with a first end (102) in the lateral region (33) of the airbag cushion (30) above the connection region (39) to the first attachment arrangement (22), and with a second end (104) on the opposing lateral region (35) of the airbag cushion (30),
**characterised in that** the airbag device (10) has a second attachment arrangement which is arranged in the lateral region (33) of the airbag cushion (30) above the connection region (39) to the first attachment arrangement (22), and which is designed to attach the airbag cushion (30) by an additional attachment point (40) to the seat frame (64) above the first attachment arrangement (22), wherein the tensile element (100) is part of the second attachment arrangement, and wherein an attachment device (110) is further provided on the tensile element (100) between the first end (102) and the second end (104) in order to attach the airbag cushion (30) by means of the attachment device (110) to the additional attachment point (40) on the seat frame (64) above the first attachment arrangement (22).

2. Device according to claim 1, **characterised in that** the attachment device (110) is arranged on the tensile element (100) such that the distance (G) between attachment device (110) and first end (102) is smaller than the distance (H) between attachment device (110) and second end (104).

3. Device according to claim 1 or 2, **characterised in that** the length of the tensile element (100) is smaller than the width of the airbag cushion (30).

4. Device according to any one of the previous claims, **characterised in that** the attachment device (110) has a bracket (110) which can be screwed, clamped or hooked on the seat frame (64).

5. Device according to any one of the previous claims, **characterised in that** the airbag device (10) is arranged on the side of the seat frame (64) that is directed towards the adjacent seat (60).

6. Device according to any one of the previous claims, **characterised in that** the greater part of the airbag cushion (30) is arranged above the airbag device (10) following activation of the airbag device (10).

7. Device according to any one of the previous claims, **characterised in that** the second attachment arrangement has bolts or screws (44) which interact with the seat frame (64) to attach the airbag cushion (30) to the seat frame (64).

8. Airbag cushion for an airbag device (10) for a motor vehicle, which can be arranged and attached on a seat frame (64), and which is designed to protect the head and the chest of an occupant in the event of a side impact or vehicle rollover; wherein the airbag device (10) further has a gas generator (20) and a first attachment arrangement (22), wherein the first attachment arrangement (22), the gas generator (20) and the airbag cushion (30) are connected to one another in order to attach the airbag device (10) to the seat frame (64);
wherein the airbag device further has a tensile element (100) which is arranged with a first end (102) in the lateral region (33) of the airbag cushion (30) above the connection region (39) to the first attachment arrangement (22), and with a second end (104) on the opposing lateral region (35) of the airbag cushion (30), **characterised in that** the airbag cushion (30) has a second attachment arrangement, which is arranged in the lateral region (33) of the airbag cushion (30) above the connection region (39) to the first attachment arrangement (22), and which is designed to attach the airbag cushion (30) by an additional attachment point (40) to the seat frame (64) above the first attachment arrangement (22), **characterised in that** the tensile element (100) is part of the second attachment arrangement, wherein an attachment arrangement (110) is further provided on the tensile element (100) between the first end (102) and the second end (104) in order to attach the airbag cushion (30) by means of the attachment device (110) to the additional attachment point (40) on the seat frame (64) above the first attachment arrangement (22).

9. Airbag cushion according to claim 8, **characterised in that** the attachment device (110) is arranged on the tensile element (100) such that the distance (G) between attachment device (110) and first end (102) is smaller than the distance (H) between attachment device (110) and second end (104).

10. Airbag cushion according to claim 8 or 9, **characterised in that** the length of the tensile element (100) is smaller than the width of the airbag cushion (30).

11. Airbag cushion according to any one of claims 8 to 10, **characterised in that** the attachment device (110) has a bracket (110) which can be screwed, clamped or hooked on the seat frame (64).

12. Airbag cushion according to any one of claims 8 to 11, **characterised in that** the airbag cushion (30) has retaining means (120) which are arranged inside the airbag cushion (30) in order to arrange the side walls of the airbag cushion (30) at a predetermined distance from one another on inflation of the airbag cushion (30).

## Revendications

1. Dispositif de coussin gonflable de sécurité pour véhicule à moteur, qui peut être disposé et fixé sur un cadre de siège (64), et qui est conçu pour protéger la tête et le thorax d'un occupant en cas de collision latérale ou de renversement du véhicule ; comprenant
un générateur de gaz (20) ;
un coussin gonflable (30) ;
un premier agencement de fixation (22), le premier agencement de fixation (22), le générateur de gaz (20) et le coussin gonflable (30) étant reliés les uns aux autres pour fixer le dispositif de coussin gonflable de sécurité (10) au cadre de siège (64) ;
un élément de traction (100), qui est disposé avec une première extrémité (102) dans la zone latérale (33) du coussin gonflable (30) au-dessus de la zone de liaison (39) avec le premier agencement de fixation (22) et avec une seconde extrémité (104) sur la zone latérale opposée (35) du coussin gonflable (30), **caractérisé en ce que** le dispositif de coussin gonflable de sécurité (10) comporte un second agencement de fixation, qui est disposé dans la zone latérale (33) du coussin gonflable (30) au-dessus de la zone de liaison (39) avec le premier agencement de fixation (22), et qui est conçu pour fixer le coussin gonflable (30) avec un point de fixation supplémentaire (40) au cadre de siège (64) au-dessus du premier agencement de fixation (22),
l'élément de traction (100) faisant partie du second agencement de fixation,
et un dispositif de fixation (110) étant en outre prévu sur l'élément de traction (100) entre la première extrémité (102) et la seconde extrémité (104) pour fixer le coussin gonflable (30) au cadre de siège (64) au-dessus du premier agencement de fixation (22) avec le point de fixation supplémentaire (40) au moyen du dispositif de fixation (110).

2. Dispositif selon la revendication 1, **caractérisé en ce que** le dispositif de fixation (110) est disposé sur l'élément de traction (100) de telle manière que la distance (G) entre le dispositif de fixation (110) et la première extrémité (102) est inférieure à la distance (H) entre le dispositif de fixation (110) et la seconde extrémité (104).

3. Dispositif selon la revendication 1 ou 2, **caractérisé en ce que** la longueur de l'élément de traction (100) est inférieure à la largeur du coussin gonflable (30).

4. Dispositif selon l'une des revendications précédentes, **caractérisé en ce que** le dispositif de fixation (110) comporte un étrier (110), qui peut être vissé, coincé ou accroché au cadre de siège (64).

5. Dispositif selon l'une des revendications précédentes, **caractérisé en ce que** le dispositif de coussin gonflable de sécurité (10) est disposé sur le côté du cadre de siège (64) qui est orienté vers le siège voisin (60).

6. Dispositif selon l'une des revendications précédentes, **caractérisé en ce que** la plus grande partie du coussin gonflable (30) est disposée au-dessus du dispositif de coussin gonflable de sécurité (10) après le déclenchement du dispositif de coussin gonflable de sécurité (10).

7. Dispositif selon l'une des revendications précédentes, **caractérisé en ce que** le second agencement de fixation comporte des boulons ou des vis (44), qui coopèrent avec le cadre de siège (64) pour fixer le coussin gonflable (30) au cadre de siège (64).

8. Coussin gonflable pour dispositif de coussin gonflable de sécurité (10) pour véhicule à moteur, qui peut être disposé et fixé sur un cadre de siège (64), et qui est conçu pour protéger la tête et le thorax d'un occupant en cas de collision latérale ou de renversement du véhicule ;
le dispositif de coussin gonflable de sécurité (10) comportant en outre un générateur de gaz (20) et un premier agencement de fixation (22), le premier agencement de fixation (22), le générateur de gaz (20) et le coussin gonflable (30) étant reliés les uns aux autres pour fixer le dispositif de coussin gonflable de sécurité (10) au cadre de siège (64) ;
le dispositif de coussin gonflable de sécurité comportant en outre un élément de traction (100), qui est disposé avec une première extrémité (102) dans la zone latérale (33) du coussin gonflable (30) au-dessus de la zone de liaison (39) avec le premier agencement de fixation (22) et avec une seconde extrémité (104) sur la zone latérale opposée (35) du coussin gonflable (30),
**caractérisé en ce que** le coussin gonflable (30) comporte un second agencement de fixation, qui est disposé dans la zone latérale (33) du coussin gonflable (30) au-dessus de la zone de liaison (39) avec le premier agencement de fixation (22), et qui est conçu pour fixer le coussin gonflable (30) avec un point de fixation supplémentaire (40) au cadre de siège (64) au-dessus du premier agencement de fixation (22),
**caractérisé en ce que** l'élément de traction (100) fait partie du second agencement de fixation, un dispositif de fixation (110) étant en outre prévu sur l'élément de traction (100) entre la première extrémité (102) et la seconde extrémité (104) pour fixer le coussin gonflable (30) au cadre de siège (64) au-dessus du premier agencement de fixation (22) avec le point de fixation supplémentaire (40) au moyen du dispositif de fixation (110).

9. Coussin gonflable selon la revendication 8, **caractérisé en ce que** le dispositif de fixation (110) est disposé sur l'élément de traction (100) de telle manière que la distance (G) entre le dispositif de fixation (110) et la première extrémité (102) est inférieure à la distance (H) entre le dispositif de fixation (110) et la seconde extrémité (104).

10. Coussin gonflable selon la revendication 8 ou 9, **caractérisé en ce que** la longueur de l'élément de traction (100) est inférieure à la largeur du coussin gonflable (30).

11. Coussin gonflable selon l'une des revendications 8 à 10, **caractérisé en ce que** le dispositif de fixation (110) comporte un étrier (110), qui peut être vissé, coincé ou accroché au cadre de siège (64).

12. Coussin gonflable selon l'une des revendications 8 à 11, **caractérisé en ce que** le coussin gonflable (30) comporte des moyens de retenue (120), qui sont disposés à l'intérieur du coussin gonflable (30) pour agencer les parois latérales du coussin gonflable (30) à une distance prédéfinie l'une de l'autre lors du gonflage du coussin gonflable (30).
